(19) Europäisches Patentamt

European Patent Office

Office européen des brevets

(11) **EP 1 662 474 A1**

(12) **EUROPEAN PATENT APPLICATION**
published in accordance with Art. 158(3) EPC

(43) Date of publication:
**31.05.2006 Bulletin 2006/22**

(51) Int Cl.:
**G09G 3/36** (2006.01)

(21) Application number: **05766222.3**

(22) Date of filing: **15.07.2005**

(86) International application number:
**PCT/JP2005/013144**

(87) International publication number:
**WO 2006/009106 (26.01.2006 Gazette 2006/04)**

(84) Designated Contracting States:
**DE FR GB**
Designated Extension States:
**AL BA HR MK YU**

(30) Priority: **16.07.2004 JP 2004210347**
**06.06.2005 JP 2005166014**

(71) Applicant: **SONY CORPORATION**
**Tokyo 141-0001 (JP)**

(72) Inventors:
• **Yano, Tomoya**
**Tokyo 141-0001 (JP)**

• **Shirochi, Yoshiki**
**Tokyo 141-0001 (JP)**
• **Isobe, Toshinobu**
**Tokyo 141-0001 (JP)**
• **Iida, Makio**
**Tokyo 141-0001 (JP)**

(74) Representative: **Horner, David Richard et al**
**D Young & Co**
**120 Holborn**
**London EC1N 2DY (GB)**

(54) **IMAGE DISPLAY DEVICE AND IMAGE DISPLAY METHOD**

(57)    An image display device and an image display method able to display a middle gray-scale by using a plurality of pixels or fields and, at the same time, improve viewing angle characteristics are provided. When displaying an image via a direct view type liquid crystal display screen, a gray-scales of an input video signal is converted to characteristic values (transmittances) of pixels two-dimensionally arranged with respect to the display image, and the gray-scale is converted so as to include, among a plurality of pixels or fields expressing a middle gray-scale, at least one pixel or field converted to a first characteristic value obtained by adding a positive correction value to the gray-scale of the input video signal, and at least one pixel or field converted to a second characteristic value obtained by adding a negative correction value to the gray-scale of the input video signal.

FIG. 3

**Description**

TECHNICAL FIELD

The present invention relates to an image display device and an image display method enabling a gray-scale display in accordance with an input video signal as in for example a liquid crystal display device.

BACKGROUND ART

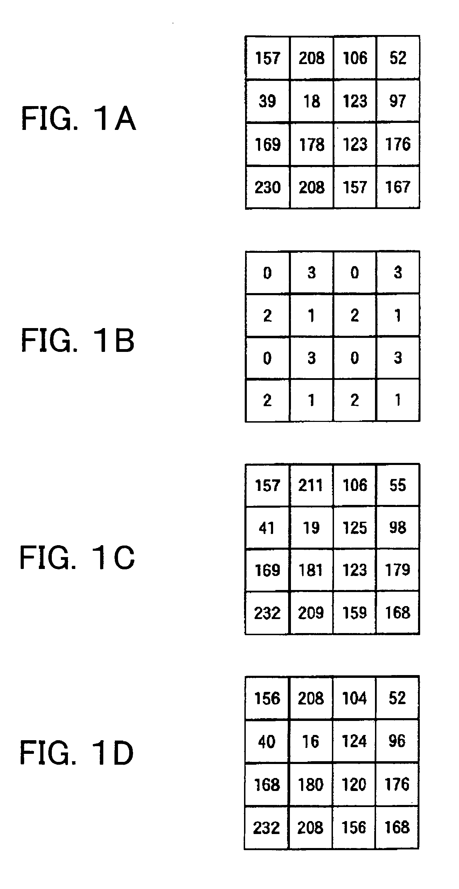

When the number of gray-scale which can be displayed on a display is small, the boundaries between gray-scales appear as patterns like contour lines of a map. These are called "pseudo contours" and greatly degrade the display performance.
In general, if each color can be displayed by about 8 bits (256 gray-scale), such pseudo contours become of levels which do not pose problems in the display performance.
In a liquid crystal display, a plasma display panel (PDP), an electroluminescence display (ELD), or other display device, however, it is relatively difficult to display each color by 8 bits (256 gray-scale).
For example, a liquid crystal display device mounting thin film transistors (TFT) for driving liquid crystals utilizes the characteristics of a liquid crystal material having a characteristic curve corresponding to an applied signal voltage, for example, a transmittance curve, and divides the voltage to match with the gray-scale levels to thereby obtain predetermined characteristic values, for example, transmittances, for middle gray-scale display.
When trying to express 8 bits of gray-scale (256 gray-scale) by such a method, however, the range of divided voltage becomes very narrow, the gray-scale levels overlap due to a variation of the liquid crystal material characteristics and the TFT characteristics in some cases, and 256 gray-scale cannot be sufficiently displayed.
Further, in a dot matrix drive system using STN liquid crystals, a color image is displayed by turning on/off the liquid crystals in units of red (R), green (G), and blue (B) dots, therefore basically only a two-value display is possible in dot units.
A plasma display panel (PDP) is also a display device emitting binary light by a dot matrix type display, therefore generally use is made of a sub field method for superposing a weighted plurality of binary images in terms of time so as to display a moving picture having a middle gray-scale. In this system, pseudo contours are sometimes generated depending on the drive format.
As a method of displaying middle gray-scale images in such a display device, dither using a plurality of pixels, error diffusion, and other methods of expressing pseudo gray-scale have been used for middle gray-scale display (see for example Patent Document 1).
For example, in a case where the input signal is formed by 8 bits (256 gray-scale) and the display performance of the display device is 6 bits (64 gray-scale), if simply discarding the lower 2 bits from the input signal of 8 bits (256 gray-scale) so as to display an image by 6 bits (64 gray-scale), patterns like contour lines of a map are produced. In order to make such patterns less visible, in dither, a small noise is deliberately added to the input signal.
The dither frequently used in general expression of pseudo gray-scale will be explained next with reference to FIGS. 1A to 1D.
Here, texture-based dither will be explained using as an example a case of a dither matrix comprised of n dots and m lines where n and m are 2. In this case, as will be explained below, 8 bits' worth of, 256, gray-scale (0, 1, 2, 3, ⋯, 255) can be pseudo expressed by 6 bits' worth of, 64, gray-scale (0, 4, 8, 12, ⋯, 252).
Assume that the input signal (8 bits) becomes as shown in FIG. 1A. To this, a 2 x 2 dither matrix of dither coefficients such as shown in FIG. 1B are added to the corresponding positions of the pixels.
The results of the addition are shown in FIG. 1C. Since the input video signal is formed by 8 bits, the lower 2 bits are discarded (made 0) in order to enable the display of a display performance of 6 bits. The values when discarding the lower 2 bits are shown in FIG. 1D.
For example, when an image data value after adding the dither coefficient in FIG. 1C is "211", it is expressed as "11010011" in binary notation, therefore the value becomes "11010000" when the lower 2 bits are discarded and becomes "208" when it is returned to the decimal notation.
By performing such processing, 8 bits (256 gray-scale)' worth of the gray-scale can be pseudo expressed by 6 bits (64 gray-scale).
The principle of such dithering will be explained below.
When the lower 2 bits among the original 8 bits of the input video signal are "0", the higher 6 bits do not increase no matter what dither coefficient is added.
When the lower 2 bits among the original 8 bits of the input video signal are "1", the higher 6 bits are advanced by 1 only in a case where the dither coefficient is 3. For example, an image signal having a value of "109" is "01101101" in binary notation. The higher 6 bits are advanced by 1 when the dither coefficient 3 (00000011) is added.

In the dither matrix of FIG. 1B, the probability of the dither coefficient being 3 is 1/4, therefore the probability of the higher 6 bits being advanced by 1 is 1/4 in the case where the lower 2 bits are "1".

When the lower 2 bits among the original 8 bits of the input video signal are "2", the higher 6 bits are advanced by 1 in the case where the dither coefficient is 3 or 2.

In the dither matrix of FIG. 1B, the probability of the dither coefficient being 3 or 2 is 2/4, therefore the probability of the higher 6 bits being advanced by 1 is 2/4 in the case where the lower 2 bits are "2".

When the lower 2 bits among the original 8 bits of the input video signal are "3", the higher 6 bits are advanced by 1 in a case where the dither coefficient is 3, 2, or 1.

In the dither matrix of FIG. 1B, the probability of the dither coefficient being 3, 2, or 1 is 3/4, therefore the probability of the higher 6 bits being advanced by 1 is 3/4 in the case where the lower 2 bits are "3".

For example, when the above dithering is applied to image data having an original value of 21 (lower 2 bits are 1), the value becomes 24 with a probability of 1 pixel per 4 pixels and becomes 20 with a probability of 3 pixels per 4 pixels. Accordingly, an average gray-scale of the image after the dithering becomes 24x1/4+20x3/4=21, and the original 8 bits can be pseudo expressed by 6 bits (lower 2 bits among 8 bits are 0). The input image data is pseudo expressed finally with 6 bits' worth of gray-scale as described above.

In such dither, the characteristic that the added value is cyclic and, further, a checkerboard like regular pattern is sometimes observed in the horizontal direction and vertical direction.

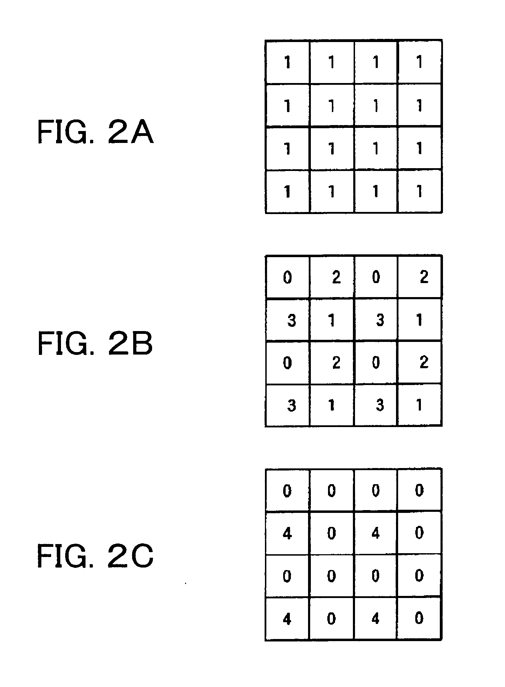

When for example all pixels are "1" in the input signal as in FIG. 2A, if performing processing to add the dither coefficients of FIG. 2B to the input signal and then make the lower 2 bits "0", an image pattern as shown in FIG. 2C is obtained. In this pattern, "4" is displayed with a ratio of 1 pixel per 4 pixels, therefore "1" can be pseudo expressed in average. However, as shown by this diagram, a fixed pattern in which "4" is regularly arranged is generated, so this is recognized as a degradation of image quality. In order to prevent the generation of such a fixed pattern, dither using a different dither matrix for each field is proposed.

Patent Document 1: Japanese Patent Publication (A) No. 2002-052758

DISCLOSURE OF THE INVENTION

PROBLEM TO BE SOLVED BY THE INVENTION

In a direct view type display having for example a viewing angle dependency, a difference ends up appearing in the image birefringence phase difference (retardation) in accordance with the viewing direction, so the colors of an image displayed on the display end up appearing changed.

For this reason, even in a case where a middle gray-scale display using a plurality of pixels can be realized by the above dither, the effect is exhibited only in a case where the display is viewed from a specific direction. A middle gray-scale cannot typically be precisely displayed when the image is viewed from any other directions.

Namely, in a general liquid crystal display device etc., middle gray-scale expression can be realized, but there is the disadvantage that the viewing angle characteristic cannot be improved.

An object of the present invention is to provide an image display device and method enabling a middle gray-scale display by using a plurality of pixels and simultaneously improving the viewing angle characteristic.

MEANS FOR SOLVING THE INVENTION

A first aspect of the present invention is an image display device enabling a gray-scale display in accordance with an input video signal, having: a gray-scale converter for converting a gray-scale of an input video signal to characteristic values of pixels two-dimensionally arranged with respect to the image to be displayed, wherein the gray-scale converter converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value.

Preferably, the device further has a correction value setter for setting the correction values in accordance with a middle gray-scale to be expressed.

Preferably, the gray-scale converter converts a gray-scale for a video signal expressed by primary color luminance components.

Preferably, the gray-scale converter converts a gray-scale so that either one of the first characteristic value or second characteristic value to which the positive or negative correction value has been added becomes a maximum characteristic value or a minimum characteristic value.

A second aspect of the present invention is an image display device enabling a gray-scale display in accordance with an input video signal, having: a gray-scale expresser for expressing a middle gray-scale of the input video signal by a field train formed by a plurality of fields, wherein the gray-scale expresser expresses a gray-scale so as to include at least one field converted to a first characteristic value obtained by adding a positive correction value to the gray-scale of the input video signal and at least one field converted to a second characteristic value obtained by adding a negative correction value.

Preferably, the device further has a setter for setting the first characteristic value and the second characteristic value in accordance with a middle gray-scale to be displayed.

Preferably, the gray-scale expresser expresses by the field train a middle gray-scale of a video signal expressed by primary color luminance components.

Preferably, the gray-scale converter expresser expresses a gray-scale so that either one of the first characteristic value or second characteristic value becomes a maximum characteristic value or a minimum characteristic value.

A third aspect of the present invention is an image display device enabling a gray-scale display in accordance with an input video signal, having: a gray-scale converter for converting a gray-scale of an input video signal to characteristic values of pixels two-dimensionally arranged with respect to the image to be displayed and a gray-scale expresser for expressing a middle gray-scale of the input video signal by a field train formed by a plurality of fields, wherein the gray-scale converter converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value, and the gray-scale expresser expresses a gray-scale so as to include at least one field converted to a first characteristic value obtained by adding a positive correction value to the gray-scale of the input video signal and at least one field converted to a second characteristic value obtained by adding a negative correction value.

Preferably, the device further has a controller for controlling the gray-scale converter to convert a gray-scale when the input video signal includes a moving picture and controlling the gray-scale expresser to express a middle gray-scale by a field train when the input video

A fourth aspect of the present invention is an image display device enabling an expression of a middle gray-scale of an input video signal by a field train formed by a plurality of fields and a gray-scale display in accordance with an input video signal, having: a display including liquid crystal pixel cells displaying an image by a in accordance with in accordance with drive voltages and a drive portion for generating drive voltages corresponding to effective voltages including a first voltage corresponding to a bright level and a second voltage corresponding to a dark level, wherein the second voltage is set at a voltage lower than a threshold voltage of a liquid crystal cell.

A fifth aspect of the present invention is an image display device enabling an expression of a middle gray-scale of an input video signal by a field train formed by a plurality of fields and a gray-scale display in accordance with an input video signal, having: a display including liquid crystal pixel cells displaying an image by a gray-scale in accordance with drive voltages and a drive portion for generating drive voltages corresponding to effective voltages including a first voltage corresponding to a bright level and a second voltage corresponding to a dark level, wherein the first voltage is set at a voltage higher than a voltage at which the characteristic value of a liquid crystal cell starts to become substantially the maximum.

Preferably, an optical thickness of each pixel cell is set in accordance with the first voltage value.

A sixth aspect of the present invention is an image display device enabling an expression of a middle gray-scale of an input video signal by a field train formed by a plurality of fields and a gray-scale display in accordance with an input video signal, having: a display including liquid crystal pixel cells displaying an image by a gray-scale in accordance with drive voltages, wherein the display is driven while changing a bright/dark ratio over time.

Preferably, the display is driven so that the dark ratio in the bright/dark ratio becomes larger.

Preferably, the device further has a drive for generating drive voltages corresponding to effective voltages including a first voltage corresponding to a bright level and a second voltage corresponding to a dark level, and the first voltage is set at a voltage higher than the voltage at which the characteristic value of a liquid crystal cell starts to become substantially the maximum.

A seventh aspect of the present invention is an image display method enabling a gray-scale display in accordance with an input video signal, having: a gray-scale conversion step of converting a gray-scale of an input video signal to characteristic values of pixels two-dimensionally arranged with respect to the image to be displayed, wherein the gray-scale conversion step converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value.

An eighth aspect of the present invention is an image display method enabling a gray-scale display in accordance with an input video signal, having: a gray-scale expression step of expressing a middle gray-scale of the input video signal by a field train formed by a plurality of fields, wherein the gray-scale expressing step expresses a gray-scale so as to include at least one field converted to a first characteristic value obtained by adding a positive correction value to the gray-scale of the input video signal and at least one field converted to a second characteristic value obtained by adding a negative correction value.

A ninth aspect of the present invention is an image display method enabling a gray-scale display in accordance with an input video signal, having: a gray-scale conversion step of converting a gray-scale of an input video signal to characteristic values of pixels two-dimensionally arranged with respect to the image to be displayed and a gray-scale expression step of expressing a middle gray-scale of the input video signal by a field train formed by a plurality of fields, wherein the gray-scale conversion step converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value, and the gray-scale expressing step expresses a gray-scale so as to include at least one field converted to a first characteristic value obtained by adding a positive correction value to the gray-scale of the input video signal and at least one field converted to a second characteristic value obtained by adding a negative correction value.

A 10th aspect of the present invention is an image display method enabling an expression of a middle gray-scale of an input video signal by a field train formed by a plurality of fields and a gray-scale display in accordance with an input video signal, having: a step of generating drive voltages corresponding to effective voltages including a first voltage corresponding to a bright level and a second voltage corresponding to a dark level and a step of applying the generated drive voltages to the liquid crystal cells, wherein the second voltage is set at a voltage lower than a threshold voltage of a liquid crystal cell.

An 11th aspect of the present invention is an image display method enabling an expression of a middle gray-scale of an input video signal by a field train formed by a plurality of fields and a gray-scale display in accordance with an input video signal, having: a step of generating drive voltages corresponding to effective voltages including a first voltage corresponding to a bright level and a second voltage corresponding to a dark level and a step of applying the generated drive voltages to the liquid crystal cells, wherein the first voltage is set at a voltage higher than a voltage at which the characteristic value of the liquid crystal cell starts to become substantially the maximum.

A 12th aspect of the present invention is an image display method enabling an expression of a middle gray-scale of an input video signal by a field train formed by a plurality of fields and a gray-scale display in accordance with an input video signal, having: driving a display including liquid crystal cells displaying an image by a gray-scale in accordance with drive voltages while changing a bright/dark ratio over time.

EFFECT OF THE INVENTION

According to the present invention, it is possible to use a plurality of pixels to display a middle gray-scale and, at the same time, improve the viewing angle characteristic.

BRIEF DESCRIPTION OF THE DRAWINGS

[FIG. 1] FIG. 1A to FIG. 1D are diagrams for explaining general dither.

[FIG. 2] FIG. 2A to FIG. 2C are other diagrams for explaining general dither.

[FIG. 3] FIG. 3 is a diagram showing an example of the configuration of an image display device of a first embodiment to which the present invention is applied.

[FIG. 4] FIG. 4A and FIG. 4B are diagrams for explaining a case where dithering is carried out by using a dither matrix.

[FIG. 5] FIG. 5 is a diagram showing a relationship of a pixel output to be corrected with respect to an input gray-scale.

[FIG. 6] FIG. 6A and FIG. 6B are diagrams for explaining a viewing angle characteristic improved by the image display device to which the present invention is applied.

[FIG. 7] FIG. 7A and FIG. 7B are other diagrams for explaining the viewing angle characteristic improved by the image display device to which the present invention is applied.

[FIG. 8] FIG. 8A and FIG. 8B are diagrams for explaining a case where one dither matrix is comprised of four pixels of F1 to F4.

[FIG. 9] FIG. 9 is a diagram showing the configuration of an image display device of a second embodiment to which the present invention is applied.

[FIG. 10] FIG. 10 is a diagram showing the relationship of a density (transmittance) of a displayed video with respect to a level of an input video signal.

[FIG. 11] FIG. 11 is a diagram showing an image region with an upper half having a density of 50% and with a lower half having a density of 100%.

[FIG. 12] FIG. 12 is a diagram showing a field train comprised of a plurality of fields in a case where the image of FIG. 11 is displayed.

[FIG. 13] FIG. 13A to FIG. 13C are diagrams showing the density of a region P in the field train from a time t0 until a time t1.

[FIG. 14] FIG. 14A and FIG. 14B are diagrams for explaining a case where a binary luminance is found based on an oblique viewing angle characteristic.

[FIG. 15] FIG. 15A and FIG. 15B are diagrams showing in a zigzag state an example of displaying a point T(v1) brighter than the brightness of an original pixel and a point T(v2) darker than that of the original pixel in the found binary values.

[FIG. 16] FIG. 16A and FIG. 16B are diagrams showing an example where a dither matrix is comprised by replacing only G among R, G, and B.

[FIG. 17] FIG. 17 is a diagram showing a configuration optimizing the dithering based on a measured oblique viewing angle.

[FIG. 18] FIG. 18 is a diagram for explaining a first method of optimizing a voltage selection of a black level of a drive voltage applied to a liquid crystal so as to make a liquid crystal response waveform approach a pulse width modulation (PWM) waveform and improve the viewing angle characteristic.

[FIG. 19] FIG. 19A to FIG. 19E are diagrams for explaining a first method of optimizing a voltage selection of a black level of a drive voltage applied to a liquid crystal so as to make a liquid crystal response waveform approach a pulse width modulation (PWM) waveform.

[FIG. 20] FIG. 20A and FIG. 20B are diagrams for explaining a second method of optimizing the voltage selection of a white level and optimizing a refractive index anisotropy Δnd (d is a panel thickness) to improve the viewing angle characteristic.

[FIG. 21] FIG. 21A and FIG. 21B are diagrams showing transmittance characteristics with respect to input gray-scale of a general liquid crystal display device and a liquid crystal display device employing the second method of the present embodiment corresponding to FIG. 20B.

[FIG. 22] FIG. 22 is a diagram for explaining an example of a drive method so that a bright/dark ratio over time becomes 1:2 according to a third method.

[FIG. 23] FIG. 23A and FIG. 23B are diagrams showing transmittance characteristics with respect to input gray-scale of a general liquid crystal display device and a liquid crystal display device employing the third method of the present embodiment corresponding to FIG. 20B.

[FIG. 24] FIG. 24A to FIG. 24C are diagrams showing transmittance characteristics with respect to input gray-scale of a general liquid crystal display device and liquid crystal display devices employing the second method and a fourth method of the present embodiment.

[FIG. 25] FIG. 25A and FIG. 25B are diagrams showing transmittance characteristics with respect to input gray-scale of a general liquid crystal display device and a liquid crystal display device employing a fifth method of the present embodiment.

[FIG. 26] FIG. 26A to FIG. 26C are diagrams showing drive voltage waveforms at bright and dark times of a general liquid crystal display device and liquid crystal display devices employing the second method and the fourth method of the present embodiment.

[FIG. 27] FIG. 27A and FIG. 27B are diagrams showing drive voltage waveforms at bright and dark times of a general liquid crystal display device and a liquid crystal display device employing the fifth method of the present embodiment.

[FIG. 28] FIG. 28 is a diagram showing a first example of the configuration of a liquid crystal display device (image display device) which can be applied to the drive method of the present embodiment.

[FIG. 29] FIG. 29 is a diagram showing a second example of the configuration of a liquid crystal display device (image display device) which can be applied to the drive method of the present embodiment.

[FIG. 30] FIG. 30 is a diagram showing a third example of the configuration of a liquid crystal display device (image display device) which can be applied to the drive method of the present embodiment.

[FIG. 31] FIG. 31A to FIG. 31C are diagrams showing a γ pattern of a data converter set in the device of FIG. 30, a γ pattern of a reference voltage generator, and a liquid crystal application voltage with respect to the input data.

[FIG. 32] FIG. 32 is a diagram showing a fourth example of the configuration of a liquid crystal display device (image display device) which can be applied to the drive method of the present embodiment.

[FIG. 33] FIG. 33A to FIG. 33C are diagrams showing a γ pattern of a data converter set in the device of FIG. 32, a γ pattern of a reference voltage generator, and a liquid crystal application voltage with respect to the input data.

[FIG. 34] FIG. 34 is a diagram showing a fifth example of the configuration of a liquid crystal display device (image display device) which can be applied to the drive method of the present embodiment.

[FIG. 35] FIG. 35A to FIG. 35E are diagrams showing γ patterns of data converters set in the device of FIG. 32, γ patterns of reference voltage generators, and a liquid crystal application voltage with respect to the input data.

[FIG. 36] FIG. 36 is a diagram showing a sixth example of the configuration of a liquid crystal display device (image display device) which can be applied to the drive method of the present embodiment.

[FIG. 37] FIG. 37A to FIG. 37F are diagrams showing γ patterns of data converters set in the device of FIG. 32, γ patterns of reference voltage generators, and liquid crystal application voltages with respect to the input data.

[FIG. 38] FIG. 38 is a diagram showing a seventh example of the configuration of a liquid crystal display device (image display device) which can be applied to the drive method of the present embodiment.

DESCRIPTION OF NOTATIONS

10... image display device, 11... luminance converter, 12... offset generator, 13... first adder circuit, 14... second adder circuit, 15... first voltage converter, 16... second voltage converter, 17... ditherer, 18... controller, 21... display, 20... image display device, 21... nonlinear converter, 22... offset generator, 23... offset table, 24... first adder circuit, 25... second adder circuit, 26... first inverse converter, 27... second inverse converter, 28... time division processor, 29... controller, 30... display, 40, 40A to 40F... liquid crystal display devices (image display devices), 41, 41C, 41F... data converter, 42, 42A... reference voltage generator, 43... source driver, 44... display panel.

BEST MODE FOR WORKING THE INVENTION

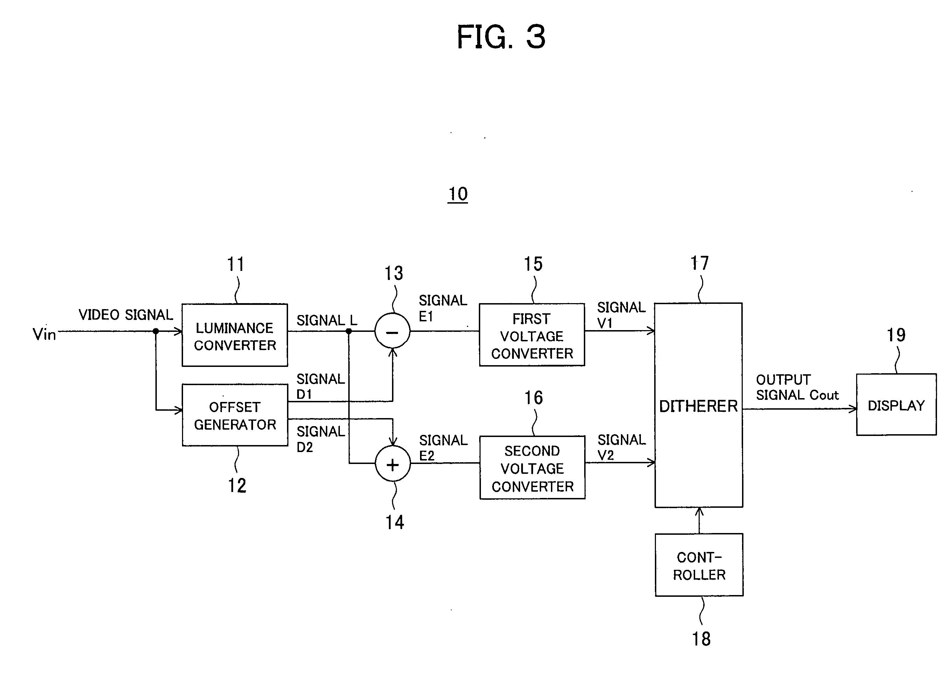

Below, embodiments of the present invention will be explained with reference to the drawings.
In the embodiments, the explanation will be given by taking as an example an image display device for displaying an image in response to an input video signal via a direct view type liquid crystal display screen.
First, an image display device 10 according to a first embodiment will be explained
FIG. 3 is a diagram showing an example of the configuration of an image display device according to a first embodiment of the present invention.
The image display device 10 is provided with, as shown in FIG. 1, a luminance converter 11 for converting a video signal H given as an applied signal voltage to a luminance signal based on a predetermined nonlinear characteristic, an offset generator 12 supplied with the input video signal H, a first adder circuit 13 and a second adder circuit 14 for adding and subtracting output signals from the luminance converter 11 and an offset table, a first voltage converter 15 supplied with a computation result of the first adder circuit 13, a second voltage converter 16 supplied with a computation result of the second adder circuit 14, a ditherer 17 supplied with signals V1 and V2 output from the first and second voltage converters 15 and 16, a controller 18 for controlling the ditherer 17, and a display 19 for displaying an image in response to the input video signal H based on an output signal Cout from the ditherer 17.
The luminance converter 11 converts the supplied video signal H to a luminance signal L based on a previously set nonlinear characteristic.
The nonlinear characteristic set in the luminance converter 11 can be freely set and may be expressed by for example a nonlinear curve having a gradient becoming more gentle as the voltage becomes lower.
The signal L converted from voltage to luminance in the luminance converter 11 is supplied to the first adder circuit 13 and the second adder circuit 14.
The offset generator 12 generates a signal D1 and a signal D2 expressed as pixel outputs correcting the gray-scale of the supplied video signal H (hereinafter, referred to as an input gray-scale).
The offset generator 12 generates signals D1 and D2 for offsetting the luminance signal L from the luminance converter 11 with reference to a previously set offset table in accordance with the applied signal voltage of the supplied video signal H.
The signal D1 generated at the offset generator 12 is output to the first adder circuit 13, and the signal D2 is output to the second adder circuit 14.
Note that, details of the offset table in the offset generator 12 and the signals D1 and D2 to be generated will be explained later.
The first adder circuit 13 is supplied with the signal L from the luminance converter 11 and supplied with the signal D1 from the offset generator 12.
The first adder circuit 13 subtracts the signal D1 from the signal L and supplies a signal E1 obtained as a result to the first voltage converter 15.
The second adder circuit 14 is supplied with the signal L from the luminance converter 11 and supplied with the signal D2 from the offset generator 12.
The second adder circuit 14 adds the signal D2 to the signal L and supplies a signal E2 obtained as a result to the second voltage converter 16.
The first voltage converter 15 converts the signal E1 supplied from the first adder circuit 13 to the γ characteristic again based on the previously set nonlinear characteristic.
This nonlinear characteristic set in the first voltage converter 15 is expressed as an inverse characteristic to the nonlinear characteristic set in the luminance converter 11. For this reason, when updating the nonlinear characteristic set in the luminance converter 11, the nonlinear characteristic set in the first voltage converter 15 will also be updated linked with this.
The signal V1 converted by the first voltage converter 15 is output to the ditherer 17.
The second voltage converter 16 converts the signal E2 supplied from the second adder circuit 14 to the γ characteristic again based on the previously set nonlinear characteristic.

This nonlinear characteristic set in the second voltage converter 16 is expressed as an inverse characteristic to the nonlinear characteristic set in the luminance converter 11. For this reason, when updating the nonlinear characteristic set in the luminance converter 11, the nonlinear characteristic set in the second voltage converter 16 will also be updated linked with this.

The signal V2 converted by the second voltage converter 16 is output to the ditherer 17.

The ditherer 17 performs dithering based on dither under the control of the controller 18 from the signals V1 and V2 supplied from the first voltage converter 15 and the second voltage converter 16.

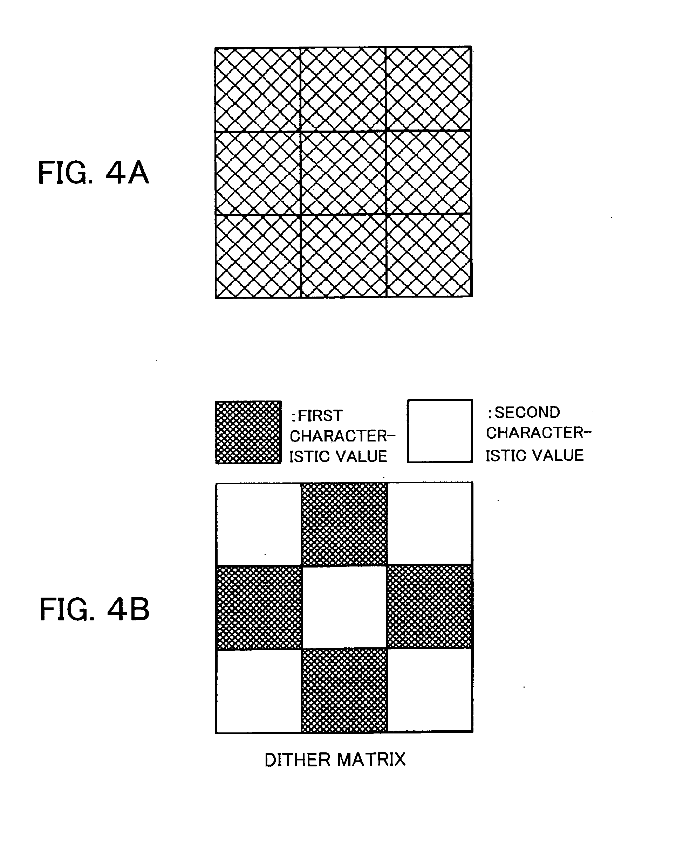

FIGS. 4 are diagrams for explaining a case where the ditherer 17 of the present embodiment uses a dither matrix to perform the dithering.

This dither, as shown in FIG. 4A, pseudo expresses an image region expressed by a middle gray-scale comprised of a plurality of pixels by a two-dimensional dither matrix comprised of two types of pixels of pixels having a first characteristic value (transmittance in the present embodiment) and pixels having a second characteristic value (transmittance in the present embodiment) expressed by a checkerboard like regular pattern in the horizontal direction and the vertical direction as shown in FIG. 4B.

The ditherer 17 outputs an output signal Cout expressed by such a dither matrix to the display 19.

The display 19 for example displays the output image of the ditherer 17 via the direct view type liquid crystal display screen mounting thin film transistors (TFT) for driving liquid crystals

The display 19 obtains the predetermined transmittances (characteristic values) and displays the middle gray-scale by utilizing for example the liquid crystal material characteristic having a transmittance curve corresponding to the output signal Cout defined as the voltage value.

Next, the operation up until the image display device 10 according to the first embodiment of the present invention generates the two-dimensional dither matrix explained above will be explained.

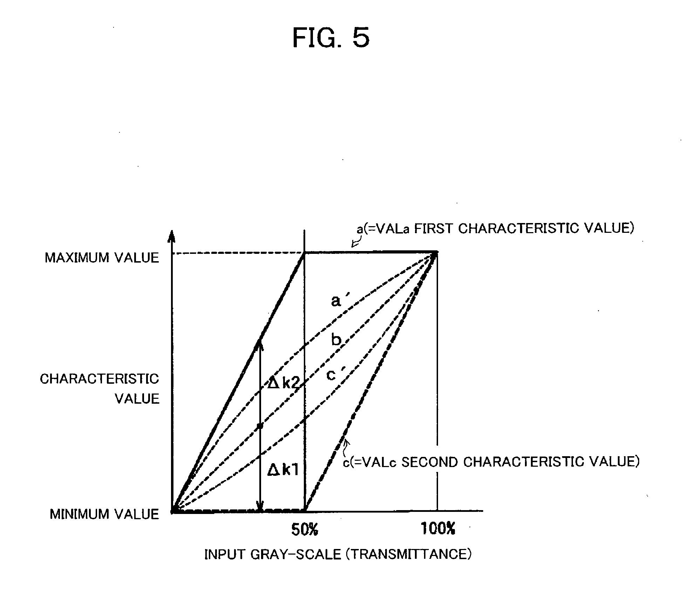

FIG. 5 is a diagram showing the relationship of the pixel output to be corrected with respect to the input gray-scale. In FIG. 5, an abscissa indicates the input gray-scale (transmittance), and an ordinate indicates the characteristic value (transmittance).

In the usual dither, predetermined dither coefficients are added to corresponding positions of a plurality of pixels. The input signal is corrected so that an average output obtained by addition by the plurality of pixels exhibits a linear relationship as shown by a straight line b in FIG. 5 with respect to the input gray-scale, whereby the resultant pixel output is obtained.

As opposed to this, in the image display device 10 of the present embodiment, for example a pair of pixels (sub pixels) are corrected based on the relationships of pixel outputs shown by a and c in FIG. 5 with respect to the input gray-scale and controlled so as to obtain a first characteristic value VALa and a second characteristic value VALC.

Specifically, in this correction, a plus correction value $\Delta k2$ is added to the straight line b as shown in FIG. 5 to find the first characteristic value VALa, while a minus correction value $\Delta k1$ is subtracted from the straight line b to find the second characteristic value VALC.

In other words, the positive correction value $\Delta k2$ and the negative correction value $\Delta k1$ are generated with respect to the input gray-scale. These correction values are added to the input gray-scale to thereby obtain the pixel output b.

The ditherer 17 is supplied with a signal V1 indicating the pixel output having the relationship of a with respect to the input gray-scale and a signal V2 indicating the pixel output having the relationship of c with respect to the input gray-scale.

The ditherer 17 determines the first characteristic value VALa based on the signal V1, determines the second characteristic value VALc based on the signal V2, and expresses the middle gray-scale via the dither matrix.

As a result, the middle gray-scale obtained by adding the first characteristic value VALa and the second characteristic value VALb and dividing the result by 2 is expressed by the dither matrix.

This corresponds to the expression of the relationship obtained by adding pixel outputs (transmittances) expressed by the relationships of a and c shown in FIG. 5 and dividing the result by 2 via a dither matrix.

Incidentally, the offset generator 12 stores in advance the relationships a and c of pixel outputs with respect to the input gray-scale in an offset table to refers to this offset table whenever the drive signal H is input so as to specify the correction values $\Delta k1$ and $\Delta k2$.

The relationships a and c of the pixel outputs previously stored in the offset table are set to a format including at least one pixel converted to the first characteristic value VALa obtained by adding the negative correction value $\Delta k1$ to the input gray-scale and at least one pixel converted to the second density obtained by adding the positive correction value $\Delta k2$ to the input gray-scale in the dither matrix as shown in FIG. 5.

For example, the relationships a and c of the pixel outputs are stored in the offset table so that either of the first characteristic value or second characteristic value obtained as a result of adding the negative correction value $\Delta k1$ and the positive correction value $\Delta k2$ becomes the maximum characteristic value (transmittance: 100%) or the minimum characteristic value (transmittance: 0%).

In FIG. 5, the negative correction value $\Delta k1$ is set so that the second characteristic value becomes the minimum characteristic value from the transmittance 0% to 50%, while the positive correction value Δk2 is set so that the first characteristic value becomes the maximum characteristic value from the transmittance 50% to 100%.

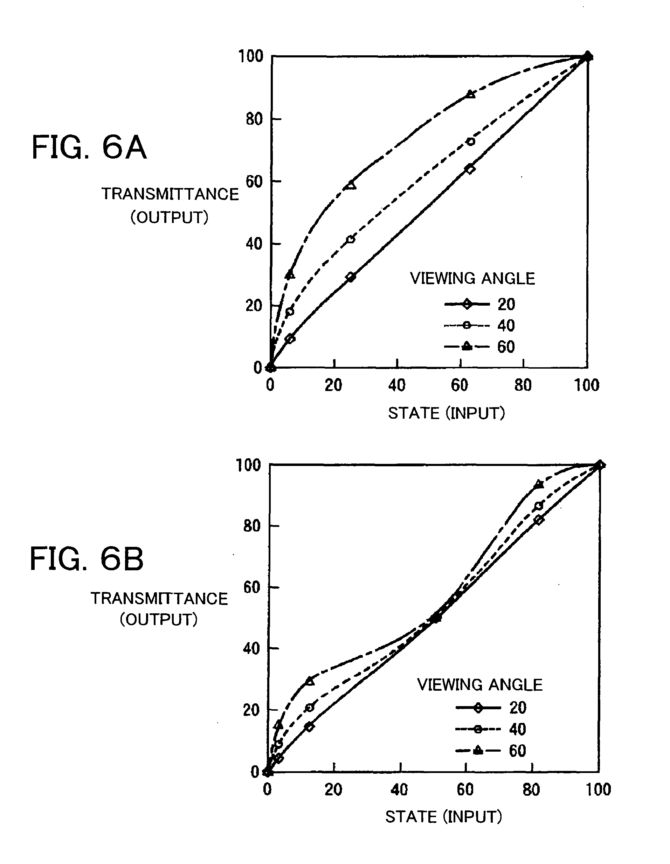

FIG. 6A and FIG. 6B are diagrams showing the relationships of the transmittance with respect to viewing angles (0 degree, 20 degrees, 40 degrees, 60 degrees) with respect to the liquid crystal display screen of the display 19 in the case where the correction values are set as explained above, in which FIG. 6A shows the relationship of the transmittance with respect to the viewing angle in the case based on the usual dither, and FIG. 6B shows the relationship of the transmittance with respect to the viewing angle in the present embodiment.

In FIG. 6A and FIG. 6B, the abscissa indicates the transmittance (input) based on the output signal Cout supplied from the ditherer 17 in accordance with the gray-scale to be displayed in the display 19, and the ordinate indicates the transmittance (output) of the gray-scale actually displayed on the display 19.

When correcting the input gray-scale to obtain the pixel output based on the linear relationship shown by the straight line b in FIG. 5 based on the usual dither, as shown in FIG. 6A, it is seen that the viewing angle characteristic is remarkably deteriorated as the viewing angle becomes larger, in other words, in the case where the liquid crystal display screen is viewed obliquely.

As opposed to this, when determining the first characteristic value and the second characteristic value so as to obtain the relationships a and c of pixel outputs as in the present embodiment, as shown in FIG. 6B, it is seen that the viewing angle characteristic is improved even in the case where the liquid crystal display screen is viewed obliquely.

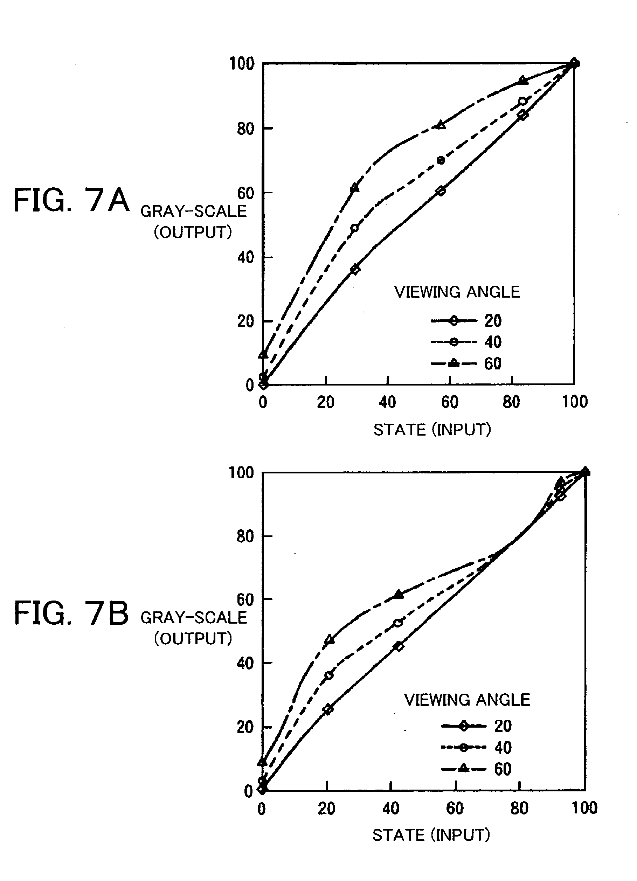

FIG. 7A and FIG. 7B are diagrams showing results expressing the relationships of transmittances shown in FIG. 6A and FIG. 6B by the γ corrected gray-scale. In FIG. 7A and FIG. 7B, the abscissas indicate input gray-scale, and the ordinates indicate output gray-scale.

In the case of a gray-scale where the input gray-scale can be actually viewed by the human eye via the liquid crystal display screen (hereinafter, referred to as an "output gray-scale"), when correcting this to obtain the pixel output based on the linear relationship shown by the straight line b in FIG. 5 with respect to the input gray-scale based on the usual dither, as shown in FIG. 7A, the linearity between the input gray-scale and the output gray-scale gradually deviates as the viewing angle becomes larger. This suggests that the viewing angle characteristic remarkably deteriorates in the case where the liquid crystal display screen is obliquely viewed.

As opposed to this, when, as in the present embodiment, determining the first characteristic value and the second characteristic value so as to obtain the relationships a and c of pixel outputs, as shown in FIG. 7B, it is seen that the viewing angle characteristic is improved even in the case where the liquid crystal display screen is obliquely viewed.

As the reason why the viewing angle is improved in this way, in the case where the transmittance is for example 50%, as shown in FIG. 5, the dither matrix is formed so that the first characteristic value becomes the transmittance of 100% and the second characteristic value becomes the transmittance of 0% in the relationships a and c of pixel outputs. The viewing angle characteristic does not deteriorate when the transmittances are 0% and 100%, therefore a middle gray-scale of a dither matrix expressed by adding the first characteristic value and the second characteristic value and dividing the result by 2 does not deteriorate in the viewing angle characteristic when the transmittance is 50%.

It is seen that deviation in accordance with the viewing angle does not occur in the case of a transmittance of 50% as shown in FIG. 6B.

Further, even from the transmittance 0% to the transmittance 50%, in the present embodiment, as shown in FIG. 5, since the second characteristic value is fixed to the transmittance 0% and the transmittance is changed only for the first characteristic value, the viewing angle characteristic no longer deteriorates at least in regard to the second characteristic value.

For this reason, when displaying a middle gray-scale of a dither matrix expressed by adding these first characteristic value and second characteristic value and dividing the result by 2, the viewing angle characteristic can be improved in comparison with the usual dither.

In the same way, even from the transmittance 50% to the transmittance 100%, in the present embodiment, as shown in FIG. 5, since the first characteristic value is fixed at the transmittance 100% and the transmittance is changed only for the second characteristic value, the viewing angle characteristic no longer deteriorates at least in regard to the first characteristic value.

For this reason, when displaying a middle gray-scale of a dither matrix expressed by adding these first characteristic value and second characteristic value and dividing the result by 2, the viewing angle characteristic can be improved in comparison with the usual dither.

In this way, in the image display device 10 of the present embodiment, when expressing a middle gray-scale of a dither matrix by the first characteristic value and the second characteristic value, since the density of either is fixed to 0% or 100%, it becomes possible to improve the viewing angle characteristic by that amount.

Note that the present embodiment is not limited to the case where the relationships a and c of pixel outputs where either of the first characteristic value or second characteristic value becomes the maximum characteristic value or the minimum characteristic value are stored in the offset table.

If at least one pixel converted to the first characteristic value (transmittance) obtained by adding the negative correction value Δk1 to the input gray-scale and at least one pixel converted to the second characteristic value (transmittance) obtained by adding the positive correction value Δk2 to the input gray-scale are included in the dither matrix, the same effect can be obtained. For example, curves where the relationships of pixel outputs shown in FIG. 5 are defined by a' and c' may be stored in the offset table as well.

Further, in the above embodiment, the case where the dither matrix was comprised of two pixels was explained, but the present invention is not limited to such a case. Any format may be employed so far as the dither matrix is comprised of a plurality of pixels.

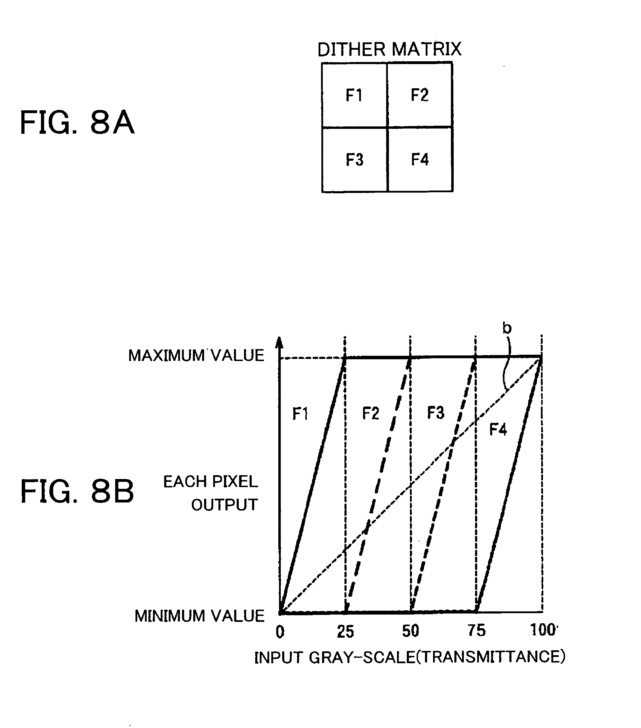

For example, when forming one dither matrix by 4 pixels of F1. to F4 as shown in FIG. 8A, in the relationships of pixel outputs to be corrected with respect to the input gray-scale, as shown in FIG. 8B, when the transmittance is 0% to 25%, the characteristic value (transmittance) of the pixel output of the pixel F1 is shifted to a large extent, while the pixels F2, F3, and F4 are fixed to the minimum characteristic value.

When the transmittance is 25% to 50%, the characteristic value of the pixel output of the pixel F2 is shifted to a large extent, while the transmittance of the pixel F1 is fixed at the maximum value (characteristic value) and further the transmittances of the pixels F3 and F4 are fixed at the minimum characteristic value.

When the transmittance is 50% to 75%, the characteristic value of the pixel output of the pixel F3 is shifted to a large extent, while the pixels F1 and F2 are fixed at the maximum characteristic value and further the pixel F4 is fixed at the minimum characteristic value.

When the transmittance is 75% to 100%, the characteristic value of the pixel output of the pixel F4 is shifted to a large extent, while the pixels F1, F2, and F3 are fixed at the maximum characteristic value.

As a result, it becomes possible to pseudo create the pixel output as shown by the straight line b in FIG. 8B. Further, in such case, since at least three pixels among the pixels F1 to F4 will be typically fixed at the minimum characteristic value (transmittance: 0%) or the maximum characteristic value (transmittance: 100%), it also becomes possible to prevent the deterioration of the viewing angle characteristic.

In this way, in the image display device 10 of the first embodiment, when expressing a middle gray-scale of a dither matrix by a first characteristic value and a second characteristic value, only the characteristic value of one pixel composing this dither matrix is shifted. The characteristic values of the other pixels are typically fixed in characteristic values (transmittances) at 0% or 100%. Therefore it becomes possible to improve the viewing angle characteristic by that amount.

Next, an image processing apparatus 20 according to a second embodiment expressing a middle gray-scale of an input video signal by a field train comprised of a plurality of fields so as to improve the viewing angle characteristic will be explained.

The image display device 10 of the first embodiment used the technique of dithering in the spatial direction to express one gray-scale by a plurality of pixels so as to improve the viewing angle characteristic.

As opposed to this, the image display device 20 of the second embodiment expresses one gray-scale by pixels of a plurality of screens arranged in the time direction to improve the viewing angle characteristic.

Below, one screen will be also referred to as a "field" and a train comprised of a plurality of fields will be referred to as a "field train". Note that the term "field" in the present description is not limited to the field in so-called interlaced scan.

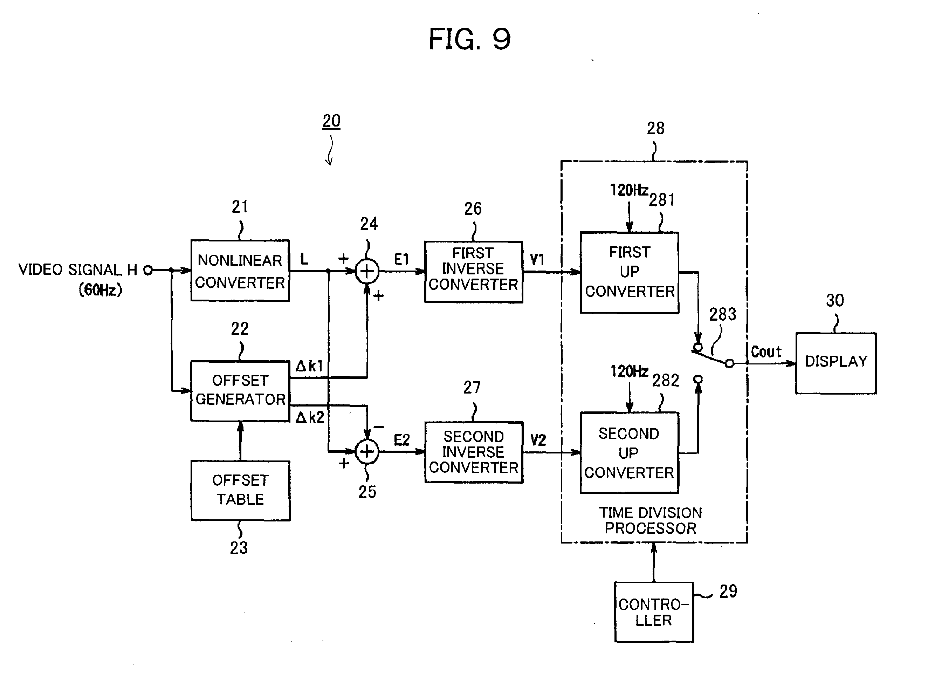

FIG. 9 is a block diagram showing an example of the configuration of the image display device 20 according to the second embodiment.

The image display device 20 is provided with, as shown in FIG. 9, a nonlinear converter 21, an offset generator 22, an offset table 23, a first adder circuit 24, a second adder circuit 25, a first inverse converter 26, a second inverse converter 27, a time division processor 28, a controller 29 for controlling the time division processor 28, and a display 30.

The nonlinear converter 21, for example, receives as input a video signal H having a screen display rate of 60Hz from the outside.

The nonlinear converter 21 converts the level of the input video signal H according to the predetermined nonlinear input/output characteristic set in advance.

The nonlinear input/output characteristic set in the nonlinear converter 21 is a nonlinear curve expressed by a so-called gamma function where the gradient becomes gentler as the level becomes lower. Note that this nonlinear input/output characteristic can be freely set.

The video signal L after the level conversion output from the nonlinear converter 21 is supplied to the first adder circuit 24 and the second adder circuit 25.

The offset generator 22 receives as input the video signal H. The offset generator 22 refers to the offset table 23 and generates the first offset signal Δk1 and the second offset signal Δk2.

The offset table 23 is a table showing values of corresponding offset signals Δk1 and Δk2 with respect to the signal level of the input video signal H.

The offset generator 22 retrieves the corresponding Δk1 and Δk2 from the offset table in accordance with the input video signal H and outputs them as offset signals.

Note that details for the first offset signal Δk1 and the second offset signal Δk2 output from the offset generator 22 will be explained later.

The first offset signal Δk1 output from the offset generator 22 is supplied to the first adder circuit 24. The second offset signal Δk2 output from the offset generator 22 is supplied to the second adder circuit 25.

The first adder circuit 24 receives as input the video signal L output from the nonlinear converter 21 and the first offset signal Δk1 output from the offset generator 22.

The first adder circuit 24 adds the video signal L and the first offset signal Δk1 to generate a video signal E1.

The video signal E1 generated by the first adder circuit 24 is supplied to the first inverse converter 26.

The second adder circuit 25 receives as input the video signal L output from the nonlinear converter 21 and the second offset signal Δk2 output from the offset generator 22.

The second adder circuit 25 subtracts the first offset signal Δk1 from the video signal L to generate a video signal E2.

The video signal E2 generated by the second adder circuit 24 is supplied to the second inverse converter 27.

The first inverse converter 26 receives as input the video signal E1 output from the first adder circuit 24. The first inverse converter 26 converts the level of the input video signal E1 according to the predetermined nonlinear input/output characteristic set in advance.

The second inverse converter 27 receives as input the video signal E2 output from the second adder circuit 25. The second inverse converter 27 converts the level of the input video signal E2 according to the predetermined nonlinear input/output characteristic set in advance.

The nonlinear input/output characteristics set in the first inverse converter 26 and the second inverse converter 27 are inverse characteristics to the nonlinear input/output characteristics set in the nonlinear converter 21.

For example, if input/output characteristics in accordance with the gamma function are set in the nonlinear converter 21, this means that inverse gamma characteristics are set in the first inverse converter 26 and the second inverse converter 27.

For this reason, when updating the nonlinear characteristics set in the nonlinear converter 21, the nonlinear characteristics set in the first inverse converter 26 and the second inverse converter 27 will also be updated linked with this.

The video signal V1 after the level conversion by the first inverse converter 26 is supplied to the time division processor 28. Further, the video signal V2 after the level conversion by the second inverse converter 27 is supplied to the time division processor 28.

Note that the nonlinear converter 21 has the same components as those of the luminance converter 11 of the image display device 10 of the first embodiment, the offset generator 22 and the offset table 23 have the same components as those of the offset generator 12 of the image display device 10 of the first embodiment, the first adder circuit 24 has the same components as those of the first adder circuit 13 of the image display device 10 of the first embodiment, and the second adder circuit 25 has the same components as those of the second adder circuit 14 of the image display device 10 of the first embodiment. Further, the first inverse converter 16 has the same components as those of the first voltage converter 15 of the image display device 10 of the first embodiment, and the second inverse converter 27 has the same components as those of the second voltage converter 26 of the image display device 10 of the first embodiment.

Further, the connections of the components described above are the same as those of the image display device 10 of the first embodiment.

The time division processor 28 has a first up convert unit 281, a second up convert unit 282, and a switch output unit 283.

The first up convert unit 281 receives as input the video signal V1 after the level conversion by the first inverse converter 26. The video signal V1 has a screen display rate (60 Hz) the same as that of the original video signal H.

The first up convert unit 281 converts the screen display rate of the input video signal V1 from 60 Hz to 120 Hz. The first up convert unit 281 performs the up conversion by repeatedly outputting for example the same screen two times.

The second up convert unit 282 receives as input the video signal V2 after the level conversion by the second inverse converter 27. The video signal V2 has a screen display rate (60 Hz) the same as that of the original video signal H.

The second up convert unit 282 converts the screen display rate of the input video signal V2 from 60 Hz to 120 Hz. The second up convert unit 282 performs the up conversion by repeatedly outputting for example the same screen two times.

The switch output unit 283 alternately selects and outputs the video signal output from the first up convert unit 281 and the video signal output from the second up convert unit 282 for each screen.

For this reason, the switch output unit 283 outputs a video signal Cout having a screen display rate of 120 Hz in which a screen generated by the addition of the first offset signal Δk1 and a screen generated by the addition of the second offset signal Δk2 are alternately repeated.

The video signal Cout output from the switch output unit 283 is supplied to the display 30.

The display 30 displays the output image of the time division processor 28 via a direct view type liquid crystal display screen mounting for example thin film transistors (TFT) for driving the liquid crystals.

In the display 30, the liquid crystal display screen changes in the transmittance at the pixel positions corresponding to the video signal Cout to display different screens of the video signal. Here, even when the screen display rate is 120 Hz, the alternating current of the liquid crystals is set at 60 Hz. This is so as to prevent the application of DC current to the liquid crystals and subsequent burn-in or flickering.

Next, the processing operation of the image display device 20 according to the second embodiment will be explained.

The image display device 20 expresses one gray-scale by two consecutive screens arranged in the time direction so as to improve the viewing angle characteristic. Specifically, the following processing is carried out.

The image display device 20 converts the screen display rate of the video signal from 60 Hz to 120 Hz.

Here, between two consecutive screens of a video signal after up converting the screen display rate, a preceding screen will be called the "first field", and the following screen will be called the "second field".

Note that while the term "field" is used, this has no relation to the "field" of an interlaced scan.

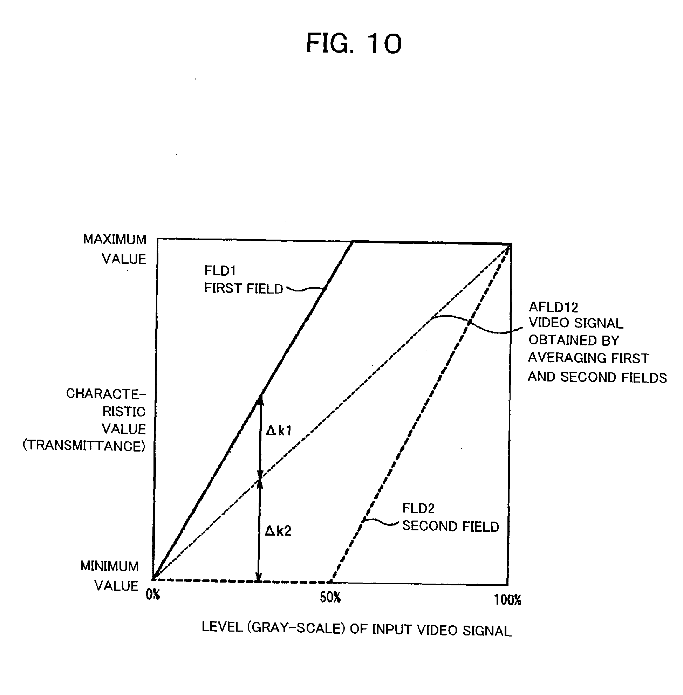

FIG. 10 is a diagram showing a characteristic value (transmittance of liquid crystal) displayed on the display 30 with respect to the signal level (gray-scale) of an input video signal H.

In the image display device 20, as shown in FIG. 10, the first offset signal $\Delta k1$ is added to the first field FLD1, and the second offset signal $\Delta k2$ is subtracted from the second field FLD2.

For this reason, in the image display device 20, an output video signal Cout in which a field corrected in level to the plus side (first field) and a field corrected in level to the minus side are alternately repeated is supplied to the display 30.

Here, human vision has an integrating characteristic with respect to the time direction, therefore, when a field corrected to the plus side and a field corrected to the minus side are alternately displayed, a user perceives an image having a level of the average value of the same.

For this reason, a user pseudo viewing the video image displayed on the display 30 sees a video signal AFDL12 represented by the average level of the first field FLD1 and the second field FLD2.

Accordingly, in the image display device 20, the offset signals $\Delta k1$ and $\Delta k2$ are determined so that the video image becomes the same as the ordinary video image seen in the case where the offset signals $\Delta k1$ and $\Delta k2$ are not added when averaging the first field FLD1 and the second field FLD2.

The offset generator 22 of the image display device 20 generates the first offset signal $\Delta k1$ and the second offset signal $\Delta k2$ by referring to the offset table 23.

The offset table 23 stores in advance the relationship of the pixel output level with respect to the level of the original video signal (input gray-scale). The offset generator 22 specifies $\Delta k1$ and $\Delta k2$ by referring to the offset table 23 whenever a video signal H is input.

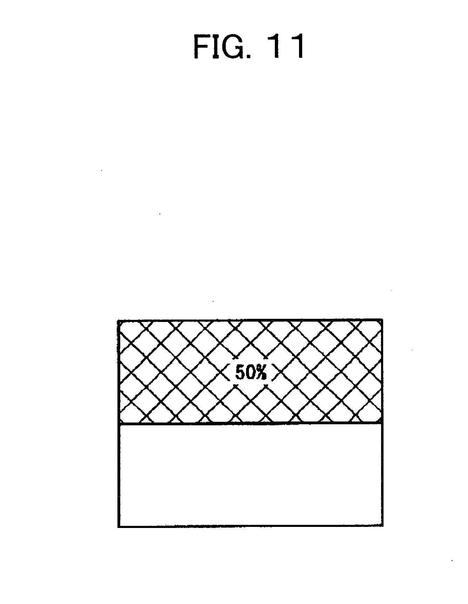

For example, consider the case as shown in FIG. 11 where a screen w in which the region of the upper half of the screen is a region displayed by a gray-scale having a transmittance of 50% and the region of the lower half of the screen is a region displayed by a gray-scale having a transmittance of 100% is displayed.

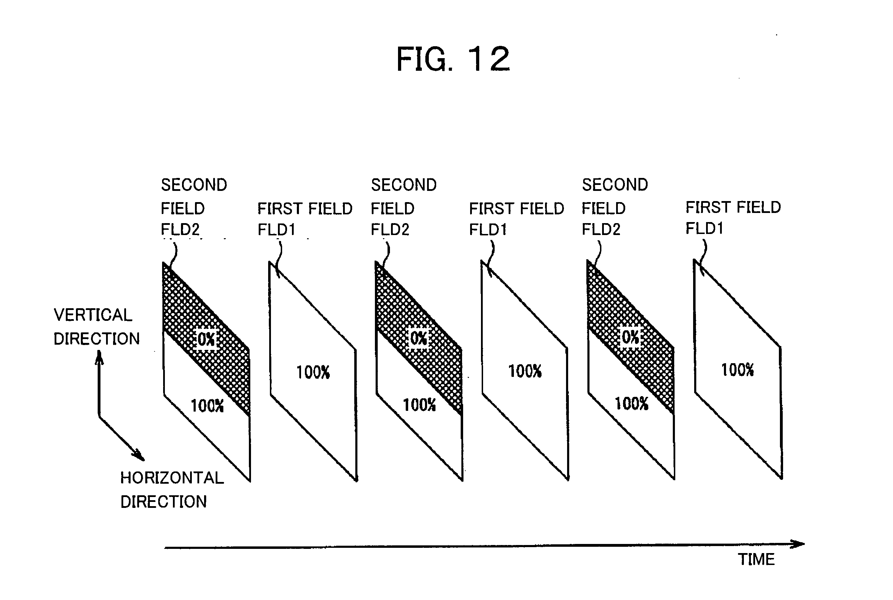

In this case, as shown in FIG. 12, the first field FLD1 becomes an image in which the entire screen is displayed by a gray-scale having the transmittance of 100%. Further, in the second field FLD2, the region of the upper half of the screen is displayed by a gray-scale having a transmittance of 0%, and the region of the lower half of the screen is displayed by a gray-scale having a transmittance of 100%.

When displaying the screen w, such a first field FLD1 and second field FLD2 are alternately displayed, therefore an image in which the density of the upper half region is viewed as a combined density of 0% and 100% can be pseudo displayed.

Further, in the image display device 20, $\Delta k1$ and $\Delta k2$ are stored in the offset table 23 so that either of the resultant value obtained by adding the first offset signal $\Delta k1$ or the resultant value by subtracting the second offset signal $\Delta k2$ becomes the maximum characteristic value (transmittance of 100%) or the minimum characteristic value (transmittance of 0%).

In FIG. 10 described above, the second offset signal $\Delta k2$ is set so that the characteristic value (transmittance) of the second field FLD2 becomes the minimum value (minimum transmittance) from the level of the input video signal of 0% to 50%, while the first offset signal $\Delta k1$ is set so that the characteristic value (transmittance) of the first field FLD1 becomes the maximum value (maximum transmittance) from the level of the input video signal of 50% to 100%.

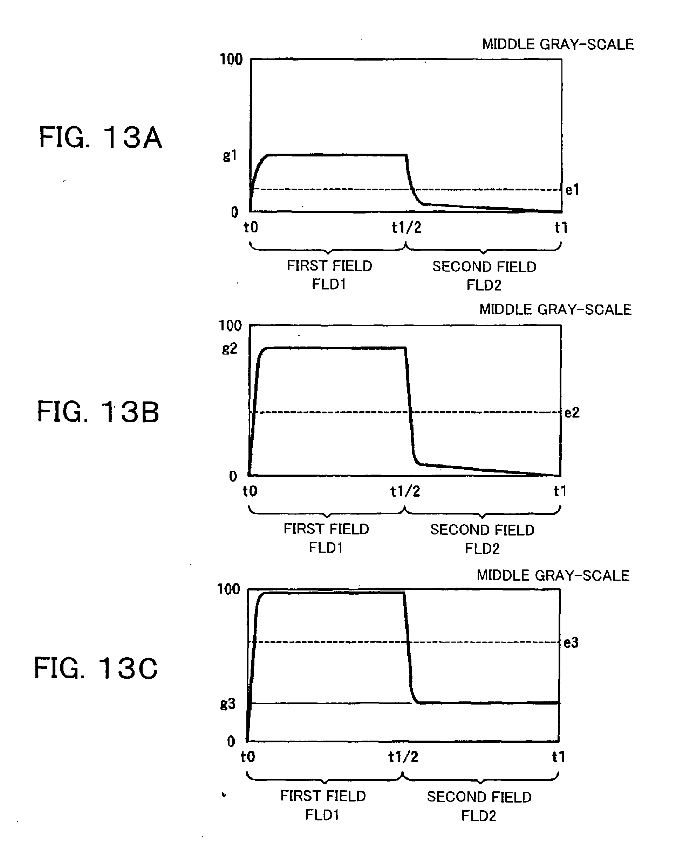

For this reason, when for example expressing a middle gray-scale e1, as shown in FIG. 13A, the first field FLD1 of a time t0 to a time t1/2 is based on a transmittance gl, and the second field FLD2 of a time t1/2 to a time t1 is set at the transmittance 0%.

Due to this, it becomes possible to pseudo project the middle gray-scale e1 for the image region to a user viewing the array of consecutive fields (hereinafter referred to as a "field train") from the time t0 to the time t1.

Further, for example, when expressing a middle gray-scale e2, as shown in FIG. 13B, the first field FLD1 of a time t0 to a time t1/2 is based on a transmittance g2, and the second field FLD2 of a time t1/2 to a time t1 is set at the transmittance 0%.

Due to this, it becomes possible to pseudo project the middle gray-scale e2 for the image region to a user continuously viewing the field train from the time t0 to the time t1.

Further, for example, when expressing a middle gray-scale e3 having a high transmittance, as shown in FIG.

13C, the first field FLD1 of a time t0 to a time t1/2 is based on the transmittance 100%, and the second field FLD2 of a time t1/2 to a time t1 is set at a transmittance g3.

Due to this, it becomes possible to pseudo project the middle gray-scale e3 for the image region to a user continuously viewing the field train from the time t0 to the time t1.

In this way, in the image display device 20 to which the present invention is applied, when expressing a middle gray-scale of a dither matrix by a first characteristic value (transmittance) and a second characteristic value (transmittance), either characteristic value is fixed to the minimum characteristic value (transmittance: 0%) or the maximum characteristic value (transmittance: 100%).

Both of these characteristic values (transmittances) 0% and 100% give good viewing angle characteristics, therefore, by setting either characteristic value at the minimum characteristic value and the maximum characteristic value, it becomes possible to improve the viewing angle characteristic by that amount.

The relationship of the transmittance with respect to the viewing angles of the liquid crystal display screen of the display 30 in the case where such offset signals $\Delta k1$ and $\Delta k2$ are set is improved in the same way as the case of the spatial dither.

Note that, in the second embodiment, one gray-scale is displayed by two consecutive fields, but the present invention is not limited to this. Gray-scales may be displayed in any way so long as the gray-scales are expressed including at lease one field converted to a characteristic value obtained by adding a positive correction value (offset value) to the gray-scale of the video signal and at least one field converted to a characteristic value obtained by adding a negative correction value (offset value) to the gray-scale of the video signal in a field train comprised of two or more consecutive fields.

Note that the present invention is not limited to the first embodiment and the second embodiment explained above. When for example the input video signal H is formed by a moving picture, the ditherer 17 may also be controlled to use the dither matrix as the two-dimensional image to express a middle gray-scale, while when the input video signal H is formed by a still image, it may be controlled to use a field train to express a middle gray-scale.

Further, the image display device according to the present embodiment may be provided with both of the configuration expressing a middle gray-scale by a dither matrix and the configuration expressing the same by a field train or may be provided with only one of the same.

Further, this image display device is not limited to the case where a middle gray-scale of a monochrome image is expressed. A middle gray-scale of a video signal expressed by the primary color luminance components of R, G, and B may be expressed based on the same technique as well.

Further, in this image display device 10, naturally the correction values $\Delta k1$ and $\Delta k2$ set in the offset generator 12 may be freely set in advance by the user.

Further, in this image display device 10, it is also possible to measure the so-called oblique viewing angle in the case where the liquid crystal display screen is obliquely viewed and optimize the dithering in the ditherer 17 based on the measured oblique viewing angle.

In general, the reason why black dot defects do not occur with an oblique viewing angle is the mostly the provision of the viewing angle compensation film. Further, in a middle gray-scale, when the deviation of the gamma characteristic becomes large, there is a noticeable phenomenon of fading of the skin color in the colors stored as gray-scale having different R, G, and B. In order to solve this it is necessary to reduce the change of the gamma characteristic with respect to the oblique viewing angle.

For this reason, two values whose original levels give the same luminance (transmittance) when averaged but separate from each other by $\Delta T$ are found.

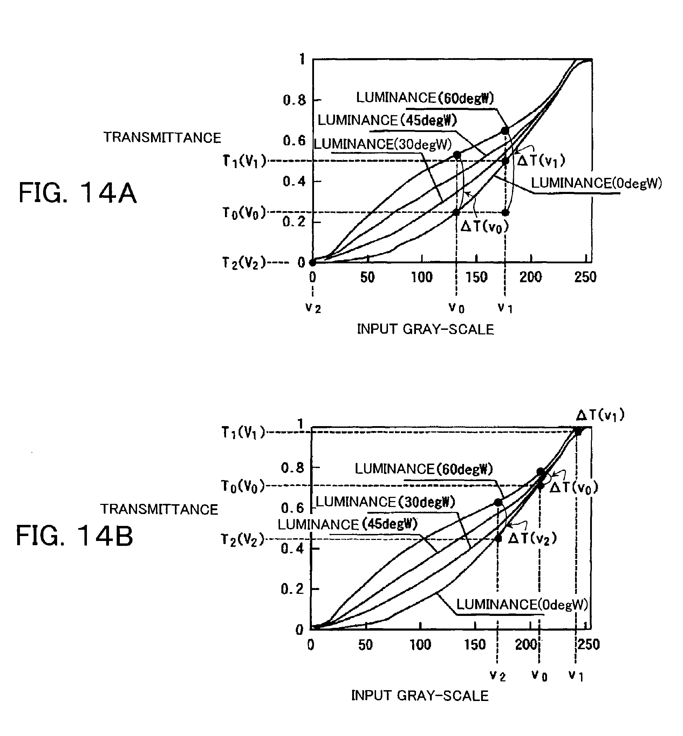

FIG. 14A and FIG. 14B show transmittance characteristics with respect to the input gray-scale in cases where the viewing angle is 0 degree, 30 degrees, 45 degrees, and 60 degrees. For example, the luminance obtained as a result of averaging T1(vl) and T2(v2) is defined as T0(v0) as shown in FIG. 14A. Further, when the actually measured gamma characteristic has shifted to the dark direction as shown in FIG. 14A,

$$T60\_org = T0(v0) + \Delta T(v0) \dots\dots\dots\dots\dots\dots \quad (1)$$

$$T60\_dither=$$

$$(T0(v1)+\Delta T(v1)+T0(v2)+\Delta T(v2))/2$$

$$=T0(v1)/2+\Delta T(v1)/2+T0(v2)/2+\Delta T(v2)/2$$

$$\ldots\ldots\ldots\ldots\ldots (2)$$

$$T0(v0)=(T1(v1)+T2(v2))/2 \ldots\ldots\ldots\ldots (3)$$

Therefore,

$$T60\_dither=T0(v0)+\Delta T(v1)/2+T0(v2)/2 \ldots (4)$$

Note that above variables show the following values.

v0: normal drive voltage for displaying the intended middle gray-scale;
v1: drive voltage for obtaining characteristic value obtained by adding positive correction value in present invention;
v2: drive voltage for obtaining characteristic value obtained by adding negative correction value in present invention;
T0(v0): targeted middle gray-scale transmittance;
T1(v1): characteristic value obtained by adding positive characteristic value in present invention;
T2(v2): characteristic value obtained by subtracting negative characteristic value in present invention;
$\Delta T(v0)$ : difference between transmittance of viewing angle 60° and transmittance of viewing angle 0° at v0;
$\Delta T(v1)$: difference between transmittance of viewing angle 60° and transmittance of viewing angle 0° at v1;
$\Delta T(v2)$: difference between transmittance of viewing angle 60° and transmittance of viewing angle 0° at v2;
T60_org: transmittance of viewing angle 60° at normal drive; and
T60_dither: transmittance of viewing angle 60° in present invention

Further, $\Delta T(v1)/2+\Delta T(v2)/2<\Delta T(v0)$, therefore $\Delta$ T60_dither becomes smaller than $\Delta$T60_org, and the fluctuation of luminance depending on the viewing angle becomes small. The condition that the $\Delta$T's be separate from each other in such a case until one side is clipped to 0 is most improved. The change of the gamma characteristic due to the oblique viewing angle becomes small.

Further, when the actually measured gamma characteristic has shifted to the bright direction as shown in FIG. 14B, $\Delta T(v1)/2+\Delta T(v2)/2>\Delta T(v0)$, therefore $\Delta$ T60_dither becomes larger than $\Delta$T60_org, therefore the fluctuation in luminance depending on the viewing angle becomes worse. In this case, the optimum point is found by using the original value T(V0) or changing $\Delta$T.

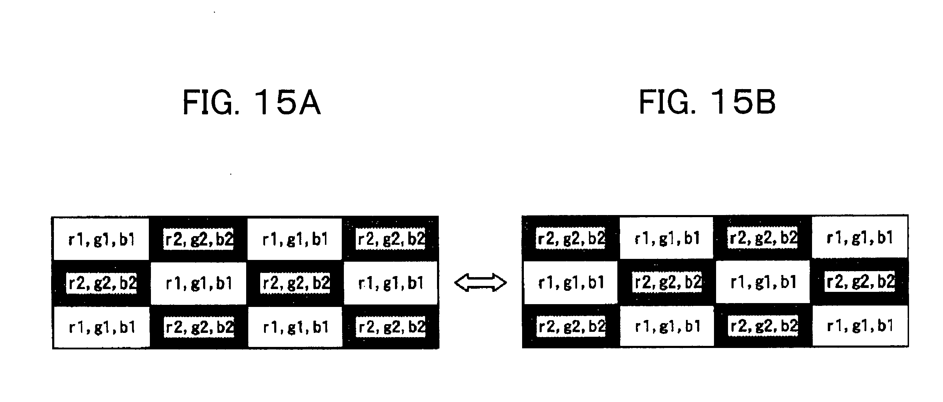

Next, the found two values are utilized for spatial dither. At this time, the two values are found in accordance with the gamma characteristic for each pixel as explained above, and the point T(v1) brighter than the brightness of the original pixel and the point T(v2) darker than that between the two found values are displayed in a zigzag state as shown in FIG. 15A.

Incidentally, for RGB as well, when displaying the pixels in a zigzag state in the same way, they will be expressed by the two values of the luminance comprised of (r1,g1,b1) and the luminance comprised of (r2,g2,b2).

After spatial dither is applied in this way, time dither is further applied. FIG. 15B shows an example where a zigzag state of patterns found in FIG. 15A is reversed along with the elapse of time and these patterns are alternately displayed.

By superposing the spatial dither and the time dither in this way, it becomes possible to create a good quality combined image in which no flickering exists, the mesh is not noticeable, and the viewing angle is spread.

Note that, for R, G, and B, in the case where pixels are displayed in a zigzag state as explained above, any primary color luminance component may be replaced.

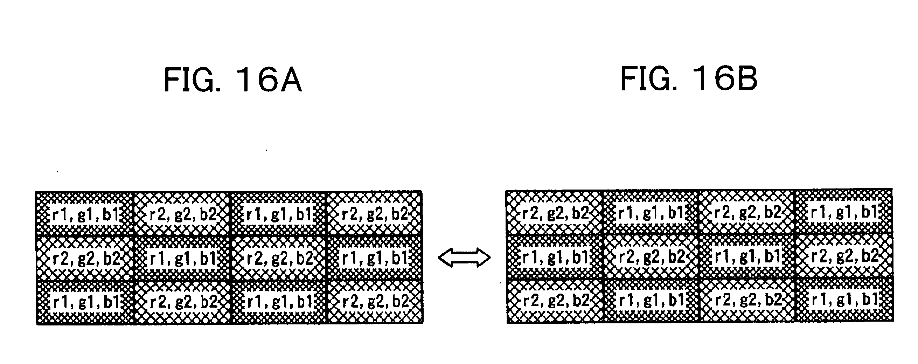

FIG. 16A and FIG. 16B show an example where only G among R, G, and B is replaced. In the example shown in FIGS. 16A and 16B, the two values of the luminance comprised of (r1,g2,b1) and the luminance comprised of (r2,g1,b2) are spatially arranged in a zigzag state. This arrangement is reversed by applying a time dither.

In such case, not a zigzag arrangement of white and black, but an impression like a complementary color checkers' arrangement of G will be given to the user.

Namely, in the example of FIGS. 16A and 16B, the luminance difference between adjacent pixels is small, the mesh is hard to see, the edges are more smoothly seen, and the dither value is found for each pixel, therefore the deterioration of the resolution is small.

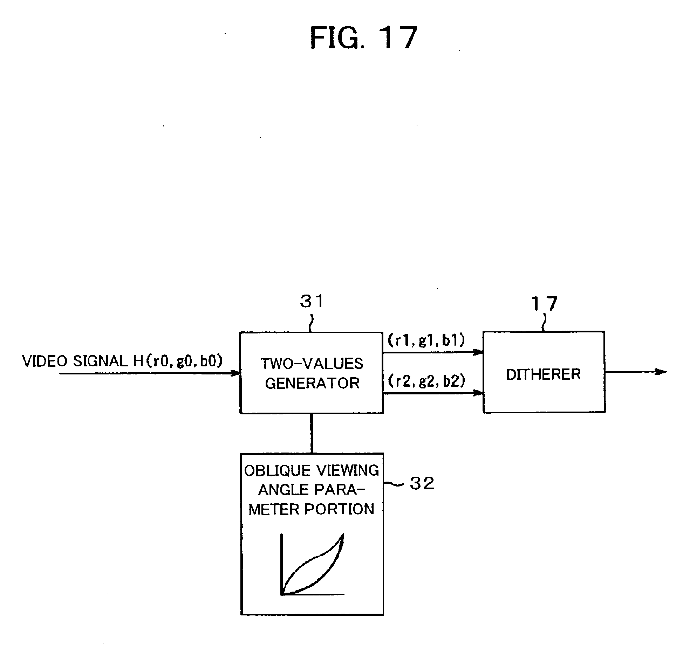

FIG. 17 shows an example of installing a configuration optimizing the dithering based on the measured oblique viewing angle into the image display device 10.

Pixels are arranged in a zigzag state as shown in FIG. 15A. When the dither matrix is comprised of two values of a luminance comprised of (r1,g1,b1) and a luminance comprised of (r2,g2,b2), this means that the device is configured by a two-values generator 31 to which the video signal H comprised of the input luminance (r0,g0,b0) is input, an oblique viewing angle parameter portion 32 connected to this two-values generator 31, and a ditherer 17A.

The two-values generator 31 finds the luminance (r1,g1,b1) and the luminance (r2,g2,b2) based on the above Equation (1) to Equation (4) with respect to the input video signal H. The two values of the luminances found in this two-values generator 31 are transmitted to the ditherer 17A.

Incidentally, the two-values generator 31 refers to the oblique viewing angle parameter unit 32 managing the measured oblique viewing angles in the form of parameters when finding these two values of luminances.

When these luminance (r1,g1,b1) and luminance (r2,g2,b2) are sent from the two-values generator 31, the ditherer 17A executes the dithering as explained above based on this.

As explained above, as the second embodiment, temporal dither expressing one gray-scale by two consecutive screens arranged continuously in the time direction so as to improve the viewing angle characteristic was explained. Below, a drive method expressing a middle gray-scale of an input video signal by a field train comprised of a plurality of fields explained below, including in the concept of the second embodiment, will be explained.

Below, an explanation will be given in sequence of a first method of optimizing the voltage selection of the black level of the drive voltage applied to the liquid crystals, optimizing the panel thickness, and making the liquid crystal response waveform approach a so-called pulse width modulation (PWM) waveform to improve the viewing angle characteristic, a second method of optimizing the voltage selection of the white level and optimizing the panel thickness to improve the viewing angle characteristic, and a third method of driving the panel by changing the bright/dark time ratio to improve the viewing angle characteristic.

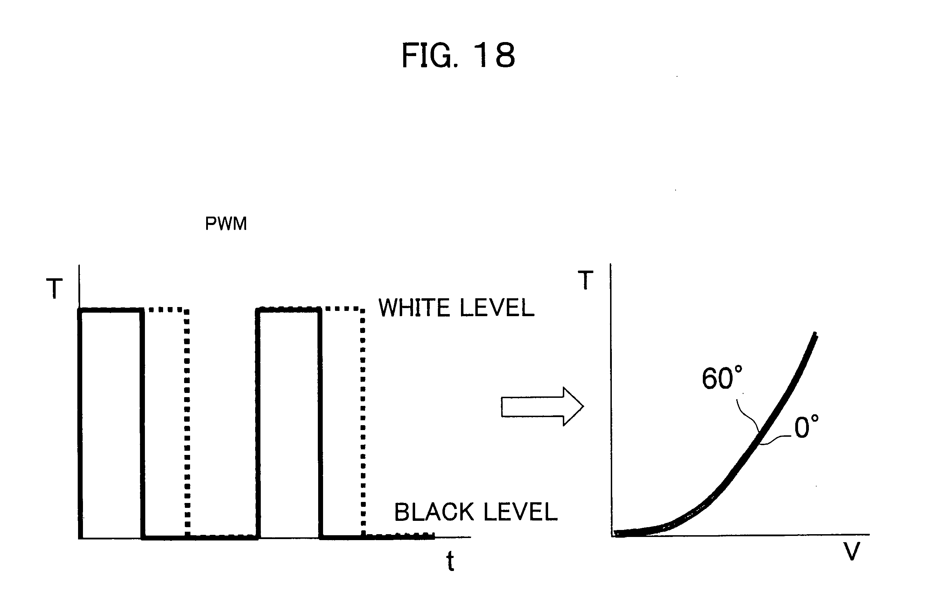

First, the first method of optimizing the voltage selection of the black level of the drive voltage applied to the liquid crystals and making the liquid crystal response waveform approach a so-called pulse width modulation (PWM) waveform to improve the viewing angle characteristic as shown in FIG. 18 will be explained.

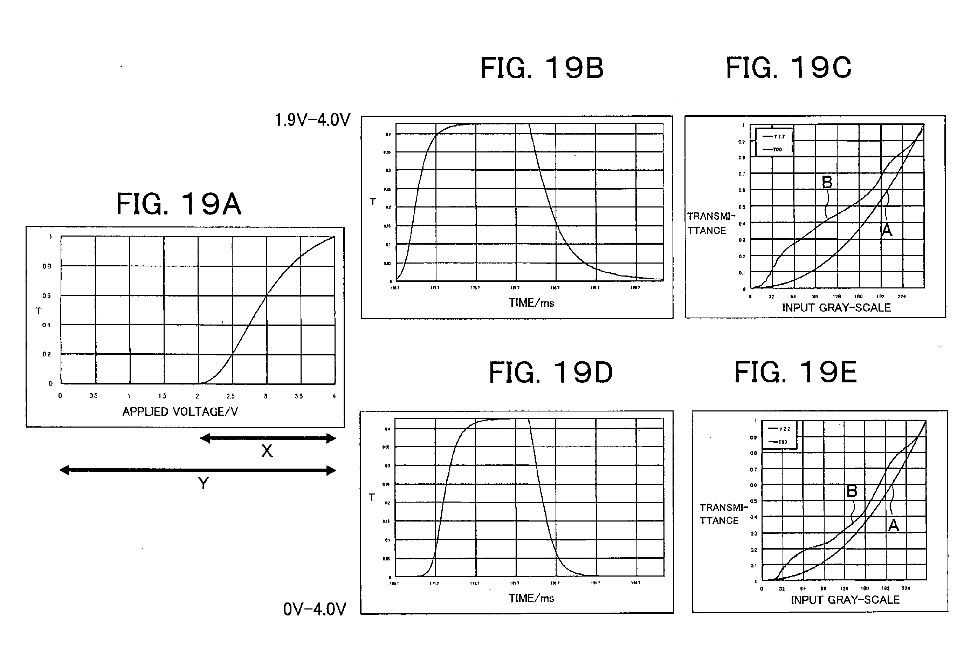

In a general liquid crystal display device, the drive voltage is set within a range shown by for example X of FIG. 19A, that is, the black level is set at a value substantially the same as the threshold voltage, for example 1.9V, and the white level is set at 4.0V.

The drive voltage waveform in this case is shown in FIG. 19B, and the transmittance characteristic with respect to the input gray-scale is shown in FIG. 19C.

In this case, a sufficient sharpness is not obtained in rising and falling portions of the effective drive voltage waveform (sufficient response characteristic is not obtained). In the $\gamma$ characteristic at the viewing angle of 60 degrees, an actual characteristic shown by B tends to give a waveform different from an ideal curve shown by A.

As opposed to this, in the first embodiment according to the present embodiment, the drive voltage is set within the range shown by Y of FIG. 19A, that is, the black level is set at a voltage lower than the threshold voltage, for example 1.9V, i.e., 0V in the example of FIG. 19A, and the white level is set at 4.0V.

The drive voltage waveform in this case is shown in FIG. 19D, and the transmittance characteristic with respect to the input gray-scale is shown in FIG. 19E.

In this case, a sufficient sharpness is obtained in rising and falling portions of the effective drive voltage waveform (sufficient response characteristic is obtained), and the control can be made so as to efficaciously narrower the pulse width, and in the $\gamma$ characteristic at the viewing angle of 60 degrees, also the actual characteristic shown by B tends to give a waveform approximating the ideal curve shown by A.

Namely, by setting the voltage value of the black level at a value lower than the threshold value (as this value is lower (nearer OV), it is possible to form a drive voltage waveform able to give a better response characteristic), as shown in FIG. 18, there is the advantage that it becomes possible to make the liquid crystal response waveform approach a so-called pulse width modulation (PWM) waveform and thereby improve the viewing angle characteristic of the middle gray-scale.

Further, the liquid crystal response characteristic is improved, therefore there is the advantage that the response with respect to a moving picture is improved.

Next, a second method of optimizing the voltage selection of the white level and optimizing an optical cell thickness $\Delta$nd represented by a product of the refractive index anisotropy $\Delta$n and the thickness d of the liquid crystal layer so as to improve the viewing angle characteristic will be explained.

In the second method, basically, the voltage of the white level is set not a 4V exhibiting the maximum transmittance, but a value larger than 4V, for example 5V.

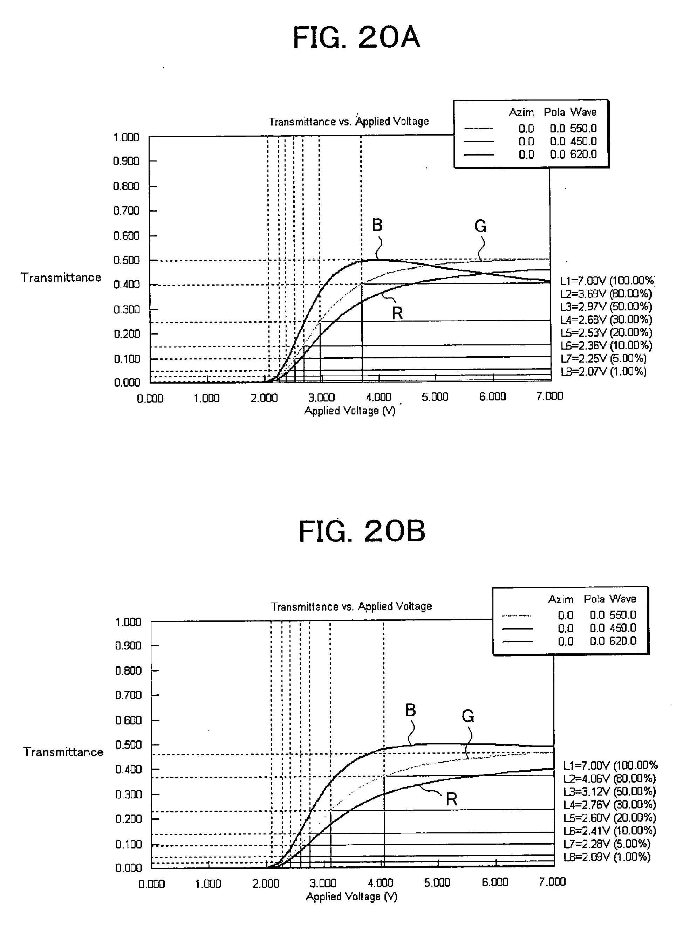

As shown in FIG. 20A, when individually observing the R, G, and B signals, even when 4V is applied as the drive voltage at the white level for R and G, it is possible to hold the transmittance at the maximum level, but the B signal tends to become lower in transmittance.

Therefore, in the present embodiment, as shown in FIG. 20B, the voltage of the white level is set not at 4V exhibiting the maximum transmittance, but a value larger than 4V, for example 5V. By setting 5V as the white level, it becomes possible to hold the transmittance at the time of white display at the level at the time of 4V or more.

Further, in the second method of the present embodiment, the optical cell thickness $\Delta$nd of a pixel cell which was 310 nm with respect to a wavelength 546 nm (vicinity of wavelength of G) in the usual liquid crystal display device is set at 270 nm, and the optical cell thickness $\Delta$nd of a pixel cell which was 330 nm with respect to a wavelength 450 nm (vicinity of wavelength of B) in the usual liquid crystal display device is set at 285 nm.

Namely, the liquid crystal panel employing the second method is constituted so that the optical cell thickness becomes thin. Note that, in the second method, the black level is set at a value in the vicinity of the threshold value in the same way as the usual liquid crystal display device or lower than the threshold value in the same way as the first method.

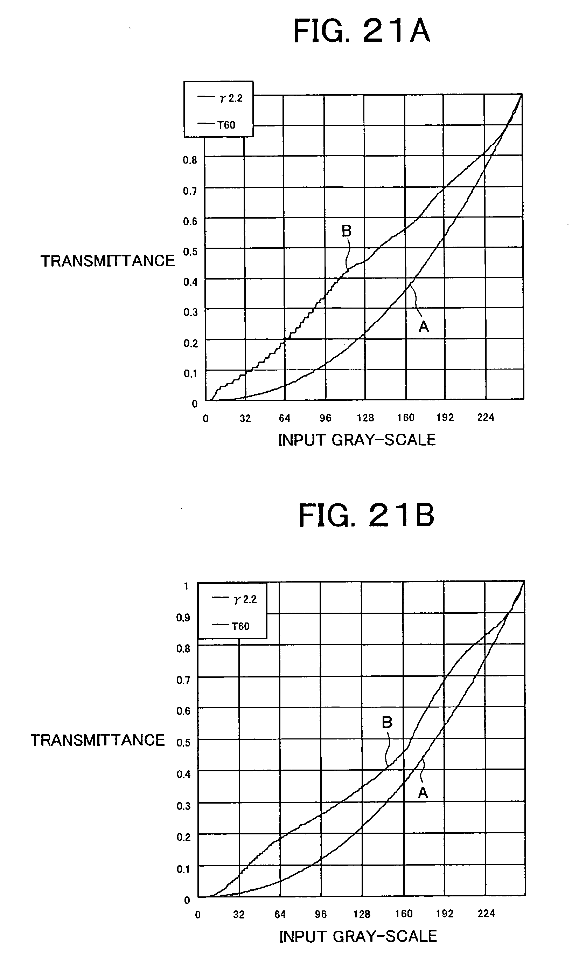

FIG. 21A shows the transmittance characteristic with respect to the input gray-scale of a general liquid crystal display device corresponding to FIG. 20A, and FIG. 21B shows the transmittance characteristic with respect to an input gray-scale of a liquid crystal display device employing the second method of the present embodiment corresponding to FIG. 20B.

In a general liquid crystal display device, as shown in FIG. 21A, in the $\gamma$ characteristic at the viewing angle of 60 degrees, the actual characteristic shown by B tends to give a waveform different from the ideal curve shown by A.

As opposed to this, in the second method according to the present embodiment, in the $\gamma$ characteristic at the viewing angle of 60 degrees, the actual characteristic shown by B tends to give a waveform approximating the ideal curve shown by A.

Namely, by setting the value of the white level of the drive voltage of the liquid crystal not at 4V at which the transmittance starts to become substantially the maximum, but at a voltage higher than 4V, for example 5V, and constituting the liquid crystal panel so that the optical thickness of the pixel cells becomes thin with respect to the predetermined wavelength corresponding to this, there is the advantage that improvement of the viewing angle characteristic of the middle gray-scale becomes possible.

Note that, in the present embodiment, the drive voltage (application voltage) of the white level is made higher by 25% and the optical cell thickness is set thinner, i.e., about 86%, in comparison with the general display device, but the present invention is not limited to this. Various aspects are possible. Further, by further using a material having a low viscosity as the liquid crystal material, a response speed of the liquid crystals becomes fast. By applying this to the above second embodiment, the viewing angle characteristic can be improved.

Next, a third method of driving a panel by changing the bright/dark time ratio so as to improve the viewing angle characteristic will be explained.

The third method basically employs a drive method giving a bright/dark ratio in time of 1:2.

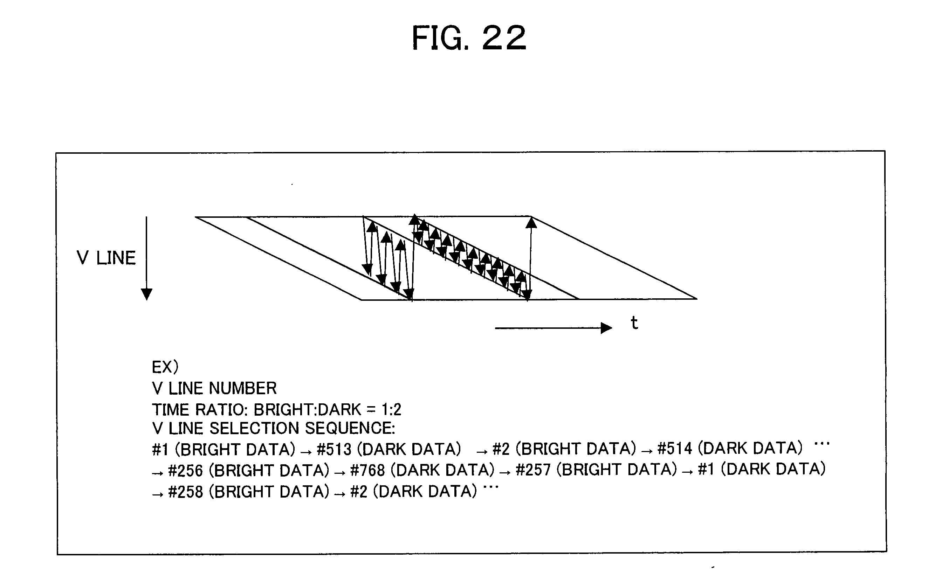

In this case, for example as shown in FIG. 22, the lines in the vertical direction (V) are accessed not in line sequence, but alternately for bright and dark lines. A method of access where the dark data becomes 2 times the bright data is employed.

For example, in a case where the number of V lines is 768, when driving the panel so that the bright/dark ratio in time becomes 1:2, the following drive control is carried out. Note that, in the following explanation, the numbers of the lines are shown by attaching numerals to the # mark.

First, a line #1 is accessed as the bright data, a line #513 is accessed as the dark data next, a line #2 is accessed as the bright data next, a line #514 is accessed as the dark data next, this is sequentially repeated thereafter, a line #256 is accessed as the bright data, a line #768 (last line) is accessed as the dark data next, and a line #257 is accessed as the bright data next.

Lines are generally accessed in the above sequence, then a line #1 is accessed as the dark data, a line #258 is accessed as the bright data next, the line #2 is accessed as the dark data next, and this is sequentially repeated thereafter.

By the above drive method, it is possible to drive the liquid crystal panel while setting the bright/dark time ratio to not 1:1, but 1:2.

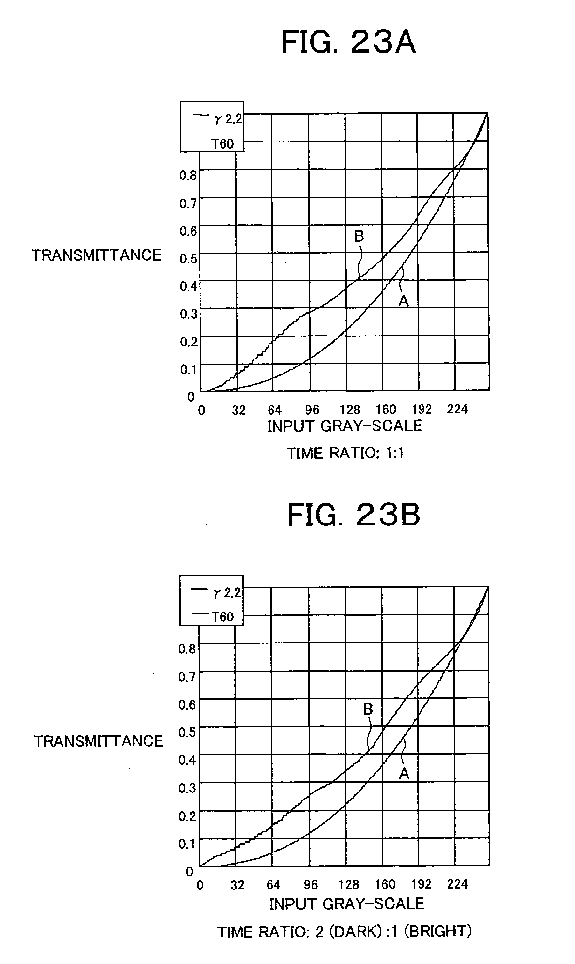

FIG. 23A shows the transmittance characteristic with respect to the input gray-scale of a general liquid crystal display device, and FIG. 23B shows the transmittance characteristic with respect to the input gray-scale of a liquid crystal display device employing the third method of the present embodiment.

In a general liquid crystal display device, as shown in FIG. 23A, in the $\gamma$ characteristic at the viewing angle of 60 degrees, the actual characteristic shown by B tends to give a waveform different from the ideal curve shown by A.

As opposed to this, in the third method according to the present embodiment, in the $\gamma$ characteristic at the viewing angle of 60 degrees, the actual characteristic shown by B tends to give a waveform approximating (approaching) the ideal curve shown by A.

Namely, by driving the liquid crystal panel so that the bright/dark ratio in time becomes 1:2, there is the advantage that the improvement of the viewing angle characteristic of the middle gray-scale becomes possible. Further, this ratio is not limited to 1:2. By driving the liquid crystal panel by changing the bright/dark ratio in time, particularly so that the dark ratio in the bright/dark ratio becomes large, it becomes possible to improve the viewing angle characteristic of the middle gray-scale.

Above, the explanation was given by taking as an example the first to third methods as the preferred method for driving a liquid crystal panel so that the bright/dark ratio in time becomes 1:2.

It is also possible to employ these methods in combination. For example, it is also possible to employ a fourth method combining the second method (the method of setting the white level at 5V and making the optical cell thickness thin) and the third method (the method of changing the bright/dark ratio in time) or a fifth method combining so-called spatial sub pixels (an area ratio is for example 2:1) and the second method.

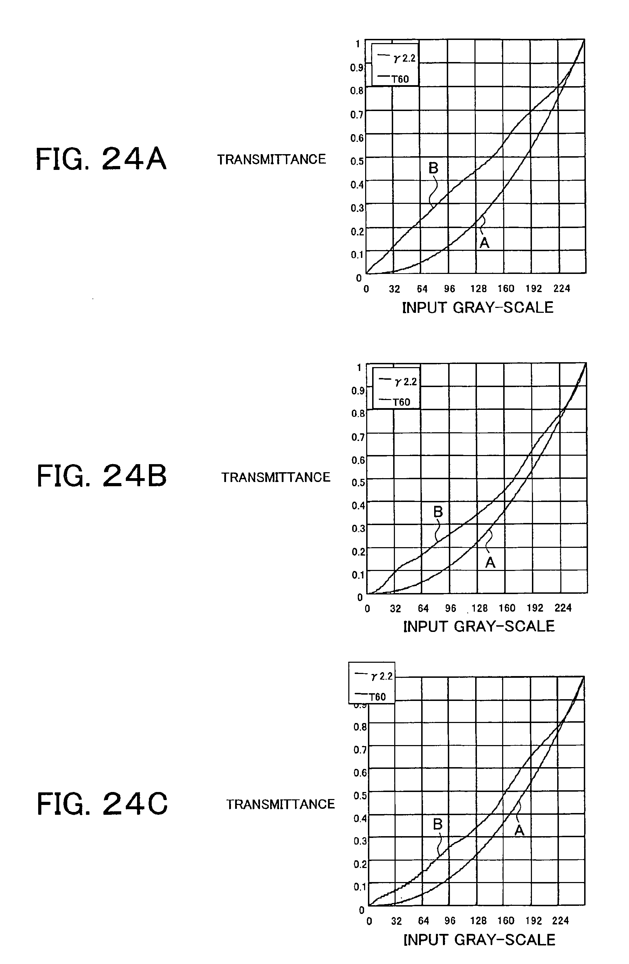

FIG. 24A shows the transmittance characteristic with respect to the input gray-scale of a general liquid crystal device, FIG. 24B shows the transmittance characteristic with respect to the input gray-scale of a liquid crystal display device employing the second method, and FIG. 24C shows the transmittance characteristic with respect to the input gray-scale of a liquid crystal display device employing the fourth method combining the second method and the third method.

As previously explained, in a general liquid crystal display device, as shown in FIG. 24A, in the γ characteristic at the viewing angle of 60 degrees, the actual characteristic shown by B tends to given a waveform different from the ideal curve shown by A.

As opposed to this, in the second method of the present embodiment, as shown in FIG. 24B, in the γ characteristic at the viewing angle of 60 degrees, the actual characteristic shown by B tends to give a waveform approximating the ideal curve shown by A.

Further, in the fourth embodiment of the present embodiment, as shown in FIG. 24C, in comparison with the second method, in the γ characteristic at the viewing angle of 60 degrees, the actual characteristic shown by B tends to give a waveform further approximating the ideal curve shown by A.

Accordingly, even when the fourth method is employed, there is the advantage that improvement of the viewing angle characteristic of the middle gray-scale is possible.

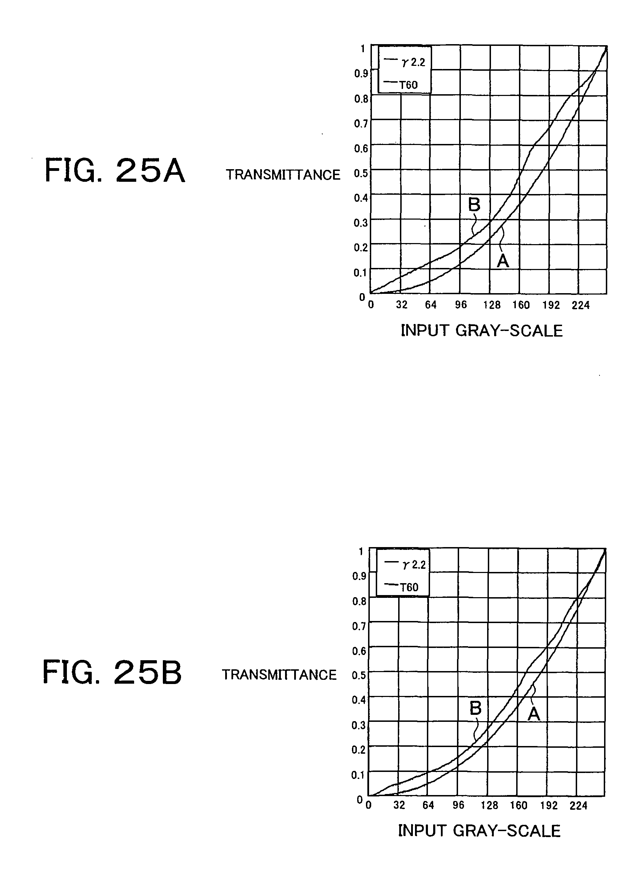

FIG. 25A shows the transmittance characteristic with respect to the input gray-scale of a liquid crystal display device corresponding to the general spatial sub pixel processing, and FIG. 25B shows the transmittance characteristic with respect to the input gray-scale of a liquid crystal display device employing the fifth method combining the second method of the present embodiment and spatial sub pixel processing.

As previously explained, in a general liquid crystal display device, as shown in FIG. 25A, in the γ characteristic at the viewing angle of 60 degrees, the actual characteristic shown by B tends to give a waveform different from the ideal curve shown by A.

As opposed to this, in the fifth method according to the present embodiment, as shown in FIG. 25B, in the γ characteristic at the viewing angle of 60 degrees, the actual characteristic shown by B tends to give a waveform approximating the ideal curve shown by A.

Accordingly, even when the fifth method is employed, there is the advantage that improvement of the viewing angle characteristic of the middle gray-scale is possible.

Next, drive voltages of the liquid crystal cell at bright and dark times will be explained.

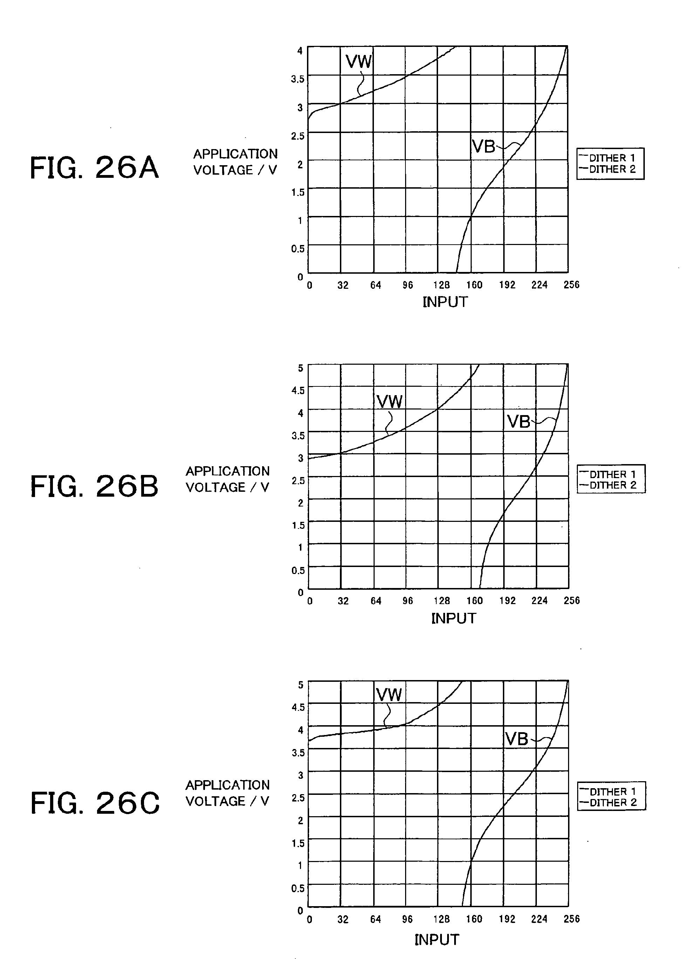

FIG. 26A shows voltage characteristic waveforms applied to a liquid crystal cell at bright and dark times with respect to the input of a general liquid crystal display device, FIG. 26B shows voltage characteristic waveforms applied to a liquid crystal cell at bright and dark times with respect to the input of a liquid crystal display device employing the second method of the present embodiment, and FIG. 26C shows voltage characteristic waveforms applied to a liquid crystal cell at bright and dark times with respect to the input of a liquid crystal display device employing the fourth method combining the second method and the third method.

In each diagram, a curve shown by VW shows the voltage waveform applied to the liquid crystal cell at the bright time, and a curve shown by VB shows the voltage waveform applied to the liquid crystal cell at the dark time.

As shown in the diagrams, in the liquid crystal display device employing the method of the present embodiment, the range of expression of the black level becomes wide, so it is possible to effectively improve the viewing angle characteristic of the middle gray-scale.

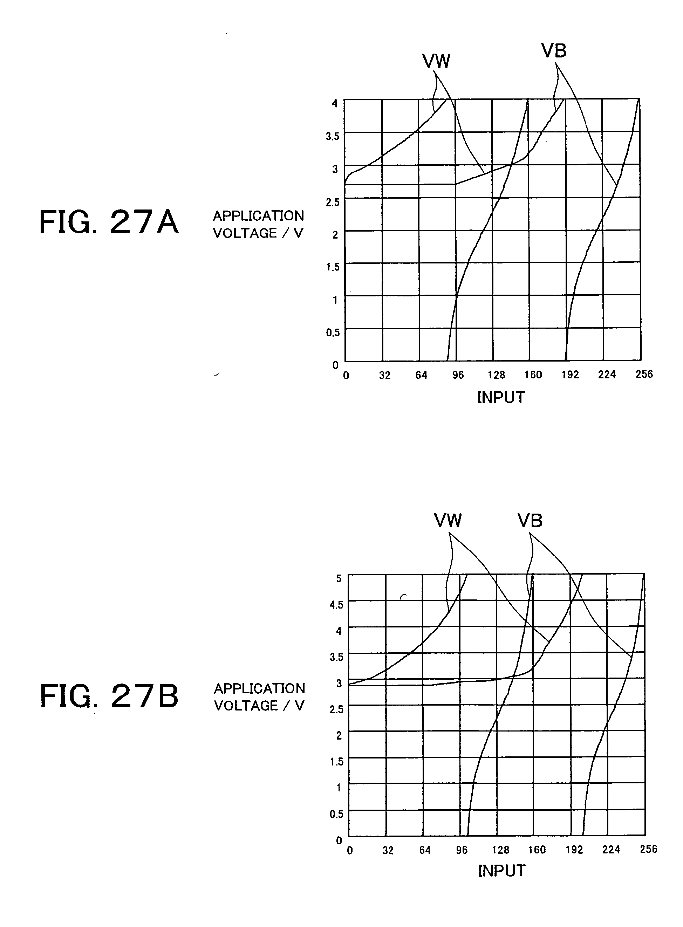

FIG. 27A shows voltage characteristic waveforms applied to a liquid crystal cell at bright and dark times with respect to the input of a general liquid crystal display device corresponding to the spatial sub pixel processing, and FIG. 27B shows voltage characteristic waveforms applied to a liquid crystal cell at bright and dark times with respect to the input of a liquid crystal display device employing the fifth method combining the second method of the present embodiment and spatial sub pixel processing.

In each diagram, the curve shown by VW shows the voltage waveform applied to a liquid crystal cell at the bright time, and the curve shown by VB shows the voltage waveform applied to a liquid crystal cell at the dark time.

As shown in the diagrams, in the liquid crystal display device employing the method of the present embodiment, the range of expression of the black level becomes wide, so it is possible to effectively improve the viewing angle characteristic of the middle gray-scale.

In the liquid crystal display devices employing the first to fifth methods of the present embodiment, bright application voltages VW and dark application voltages VB shown in FIG. 26A to FIG. 26C and FIGS. 27A and 27B are switched for each field and supplied to a so-called source driver at a stage in front of the liquid crystal panel.

Below, examples of the configuration of liquid crystal display devices corresponding to these methods will be explained.

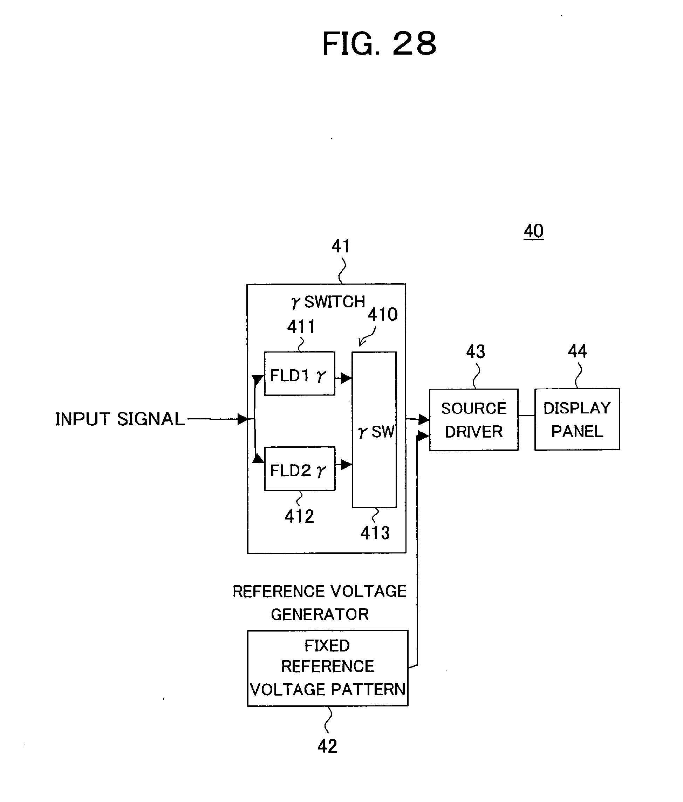

FIG. 28 is a diagram showing a first example of the configuration of a liquid crystal display device (image display device) which can be applied to the drive method of the present embodiment.

This liquid crystal display device 40 has a data converter 41, a reference voltage generator 42, a source driver 43, and a display panel 44 as the display. The drive portion is configured by the data converter 41, the reference voltage generator 42, and the source driver 43. In the example of the configuration of the display device shown below, even when the input signal is a usual signal having an image display rate of 60 Hz, a signal obtained by raising the image display rate to 120 Hz and interpolating or a signal further subjected to overdrive processing, the drive method of the present embodiment can be applied.

The data converter 41 has a $\gamma$ switch 410. The $\gamma$ switch 410 has a first field $\gamma$ characteristic holder 411, a second field $\gamma$ characteristic holder 412, and a $\gamma$ switching switch 413.

The first field $\gamma$ characteristic holder 411 holds for example the characteristic voltage $\gamma$ pattern of the bright voltage VW set corresponding to the above $\gamma$ characteristic in a form of for example a LookUp Table.

The second field $\gamma$ characteristic holder 412 holds for example the characteristic voltage $\gamma$ pattern of the dark voltage VB set corresponding to the above $\gamma$ characteristic in the form of for example a LookUp Table.

The $\gamma$ switching switch 413 switches output data of the first field $\gamma$ characteristic holder 411 and the second field $\gamma$ characteristic holder 412 for each field and selectively outputs the same as the source driver signal to the source driver 43. The reference voltage generator 42 supplies a fixed reference voltage pattern to the source driver 43.

The source driver 43 compares the source driver signal selectively supplied by the $\gamma$ switch 410 with the reference voltage pattern and outputs a predetermined drive signal to the display panel 44.

The above drive method is employed with respect to this device 40, whereby the gray-scale performance is improved.

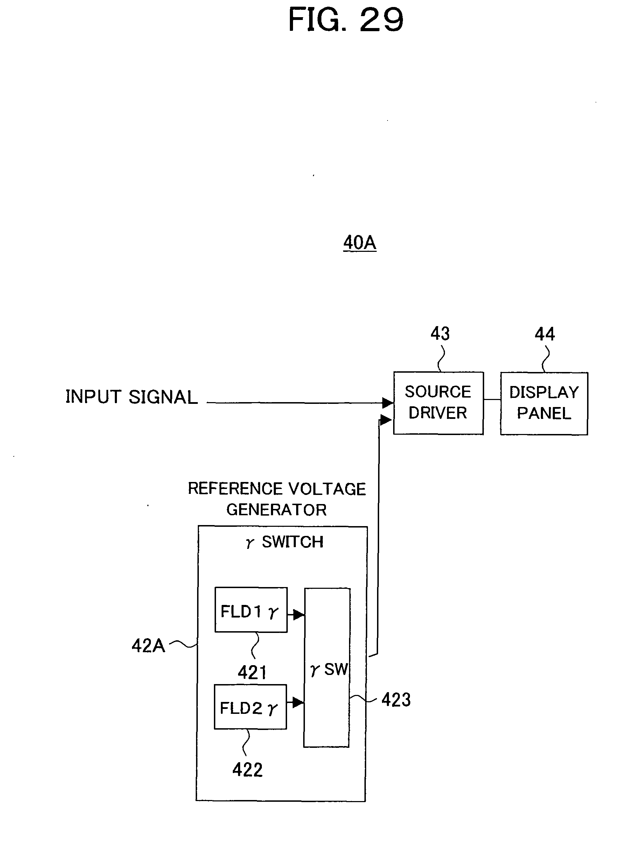

FIG. 29 is a diagram showing a second example of the configuration of a liquid crystal display device which can be applied to the drive method of the present embodiment.

This liquid crystal display device 40A has a reference voltage generator 42A, a source driver 43, and a display panel 44.

The difference of the device 40A of FIG. 29 from the device of FIG. 28 resides in that the function of the $\gamma$ switch is imparted to the reference voltage generator 42A, and the original data is input to the source driver 43.

The reference voltage generator 42A has a first field $\gamma$ characteristic holder 41, a second field $\gamma$ characteristic holder 422, and a $\gamma$ switch 423.

The first field $\gamma$ characteristic holder 421 holds for example the characteristic voltage $\gamma$ pattern at the bright time set corresponding to the above $\gamma$ characteristic in the form of for example a LookUp Table.

The second field $\gamma$ characteristic holder 422 holds for example the characteristic voltage $\gamma$ pattern at the dark time set corresponding to the above $\gamma$ characteristic in the form of for example a LookUp Table.

The $\gamma$ switching switch 423 switches output data of the first field $\gamma$ characteristic holder 421 and the second field $\gamma$ characteristic holder 422 for each field and selectively outputs the same as the reference voltage to the source driver 43.

The source driver 43 compares the supplied source driver signal with the reference voltage pattern and outputs a predetermined drive signal to the display panel 44.

The above drive method is employed with respect to this device 40A, whereby the gray-scale performance is improved.

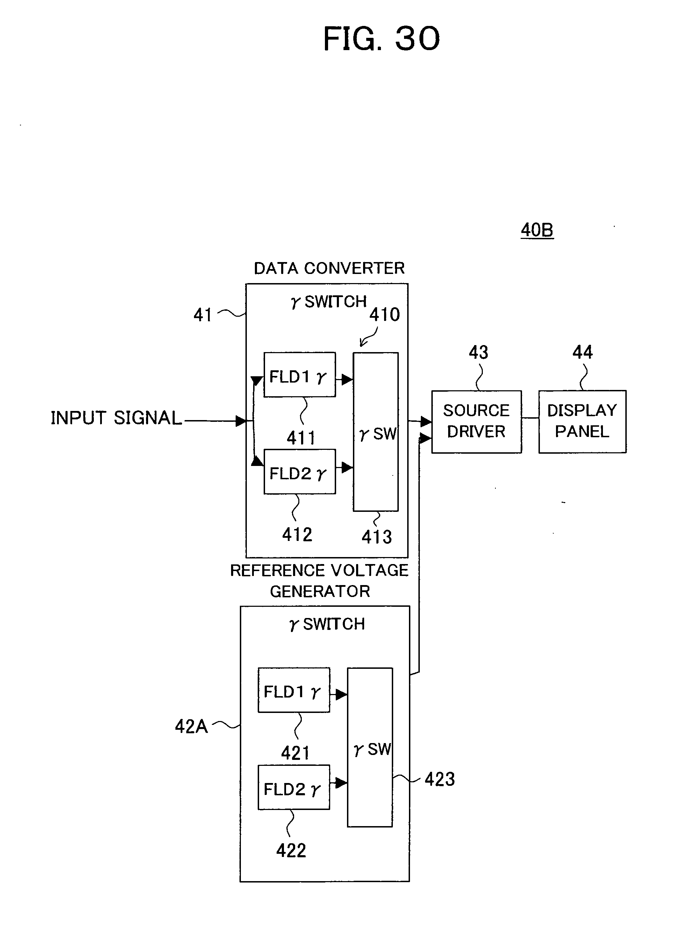

FIG. 30 is a diagram showing a third example of the configuration of a liquid crystal display device which can be applied to the drive method of the present embodiment.

This liquid crystal display device 40B has a configuration provided with the $\gamma$ switch 41 of FIG. 28 and the reference voltage generator 42A having the switch function of FIG. 29 together.

Accordingly, the explanation of basic functions of the components will be omitted.

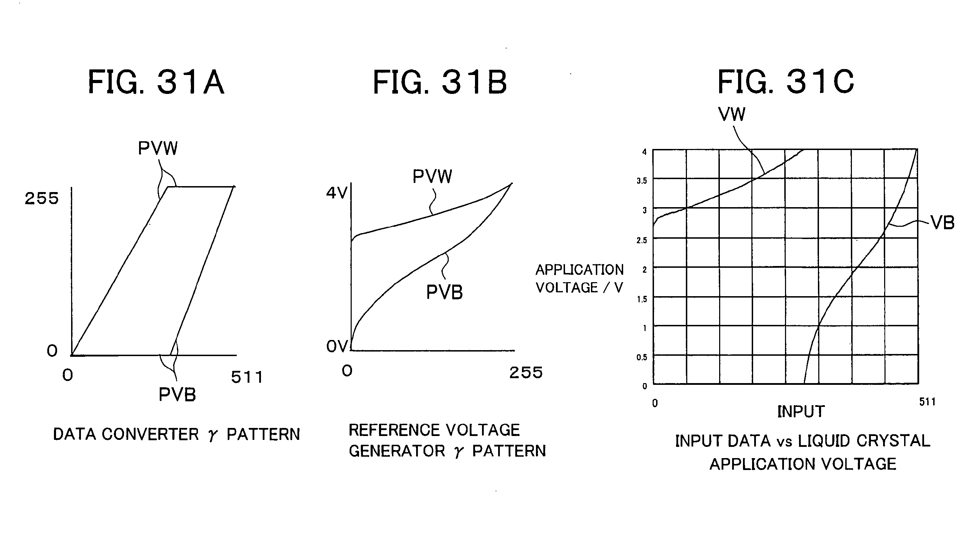

FIG. 31A shows data conversion $\gamma$ patterns PVW and PVB held in the first field $\gamma$ characteristic holder 411 and the second field $\gamma$ characteristic holder 412 of the $\gamma$ switch 410, FIG. 31B shows data conversion $\gamma$ patterns PVW and PVB held in the first field $\gamma$ characteristic holder 421 and the second field $\gamma$ characteristic holder 422 of the reference voltage generator 42A, and FIG. 31C shows the output (liquid crystal application voltage) characteristic of the source driver 43 with respect to the input data.

In the device 40B of FIG. 30, the source driver 43 compares the γ pattern selectively supplied from the γ switch 410 for each field and the γ pattern selectively supplied from the reference voltage generator 42A for each field to generate the bright voltage VW and dark voltage VB as shown in FIG. 31C and supplies the same to the display panel 44.

The above method is employed with respect to this device 40B, whereby the gray-scale performance is improved.

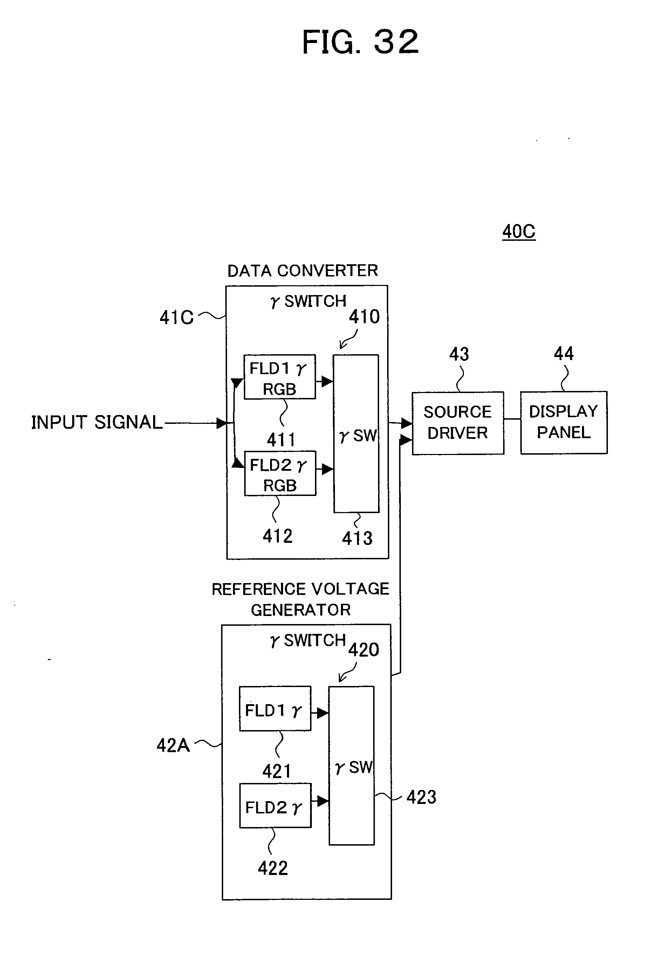

FIG. 32 is a diagram showing a fourth example of the configuration of a liquid crystal display device which can be applied to the drive method of the present embodiment.

The difference of this liquid crystal display device 40C from the device 40B of FIG. 30 resides in the configuration of performing γ corrections of R, G, and B. The basic function of the γ switch 410C of the data converter 41C is the same. Further, the reference voltage generator 42A has the same configuration as that of the device 40B of FIG. 30. Accordingly, the explanation of basic functions of the components will be omitted.

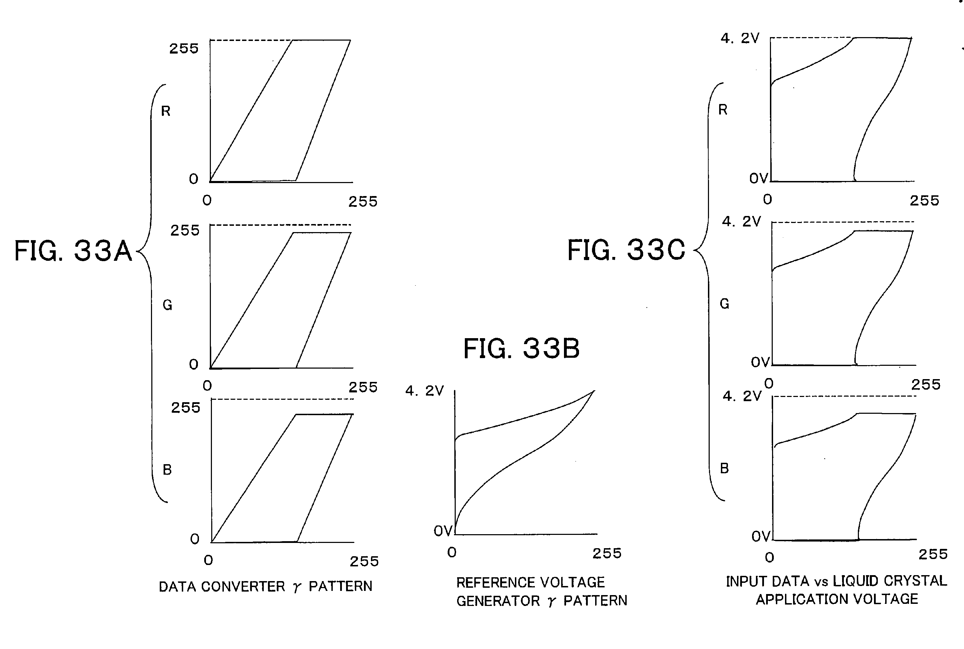

FIG. 33A shows data conversion γ patterns PVW and PVB corresponding to R, G, and B held in a first field γ characteristic holder 411C and a second field γ characteristic holder 412C of a γ switch 410C, FIG. 33B shows data conversion γ patterns PVW and PVB held in the first field γ characteristic holder 421 and the second field γ characteristic holder 422 of the reference voltage generator 42A, and FIG. 33C shows the output (liquid crystal application voltage) characteristics of the source driver 43 corresponding to R, G, and B with respect to the input data.

In the device 40C of FIG. 33, the source driver 43 compares the γ patterns corresponding to R, G, and B selectively supplied from the γ switch 410C of the data converter 41C for each field and the γ pattern selectively supplied from the reference voltage generator 42A for each field to generate the bright voltage VW and dark voltage VB as shown in FIG. 31C and supplies the same to the display panel 44.

The above method is employed with respect to this device 40C, whereby the gray-scale performance is improved.

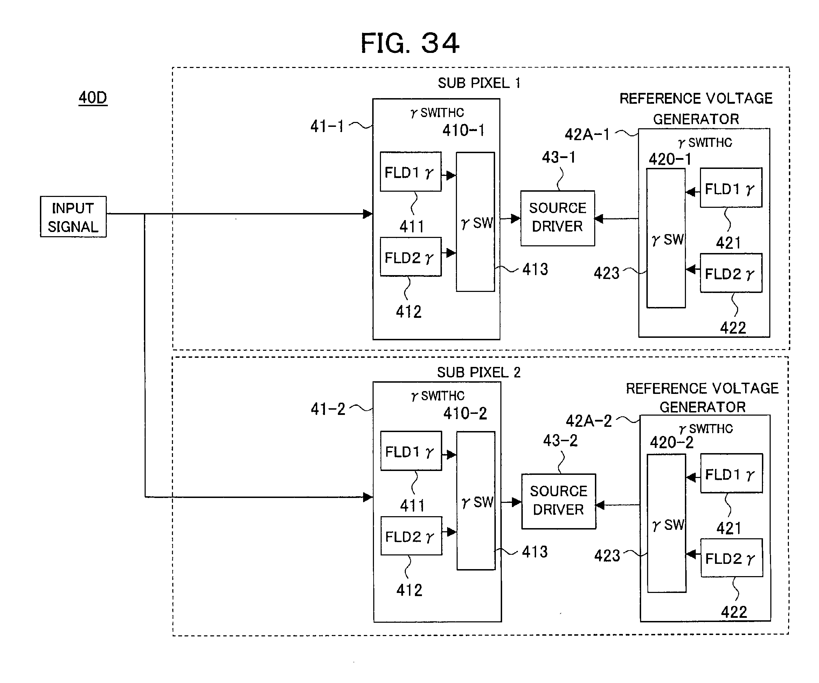

FIG. 34 is a diagram showing a fifth example of the configuration of a liquid crystal display device which can be applied to the drive method of the present embodiment.

The difference of this liquid crystal display device 40D from the device 40B of FIG. 30 resides in the configuration corresponding to the sub pixel conversion processing, that is, the parallel arrangement of a sub pixel 1 system and a sub pixel 2 system with respect to the input signal.

The functions of the components are the same as those in FIG. 30, so the explanation of the basic functions of the components will be omitted.

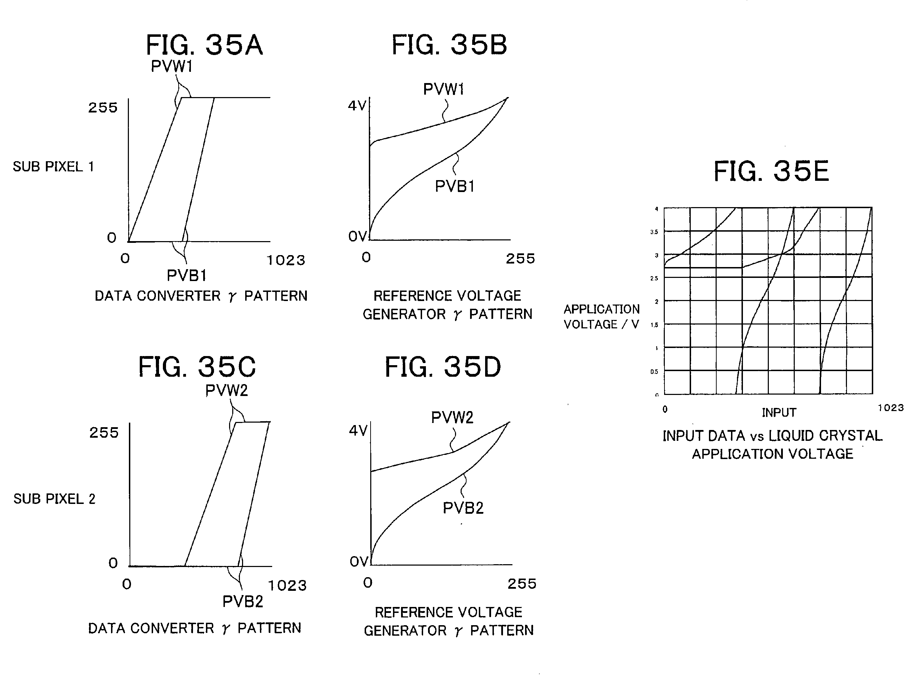

FIG. 35A shows data conversion γ patterns PVW1 and PVB1 held in the first field γ characteristic holder 411 and the second field γ characteristic holder 412 of a γ switch 410-1, FIG. 33B shows data conversion γ patterns PVW2 and PVB2 held in the first field γ characteristic holder 411 and the second field γ characteristic holder 412 of a γ switch 410-2, FIG. 35C shows data conversion γ patterns PVW1 and PVB1 held in the first field γ characteristic holder 421 and the second field γ characteristic holder 422 of a reference voltage generator 42A-1, FIG. 35D shows data conversion γ patterns PVW2 and PVB2 held in the first field γ characteristic holder 421 and the second field γ characteristic holder 422 of the reference voltage generator 42A-2, and FIG. 35E shows the output (liquid crystal application voltage) characteristic of the source driver 43 with respect to the input data.

The above method is employed with respect to this device 40D, whereby the gray-scale performance is improved.

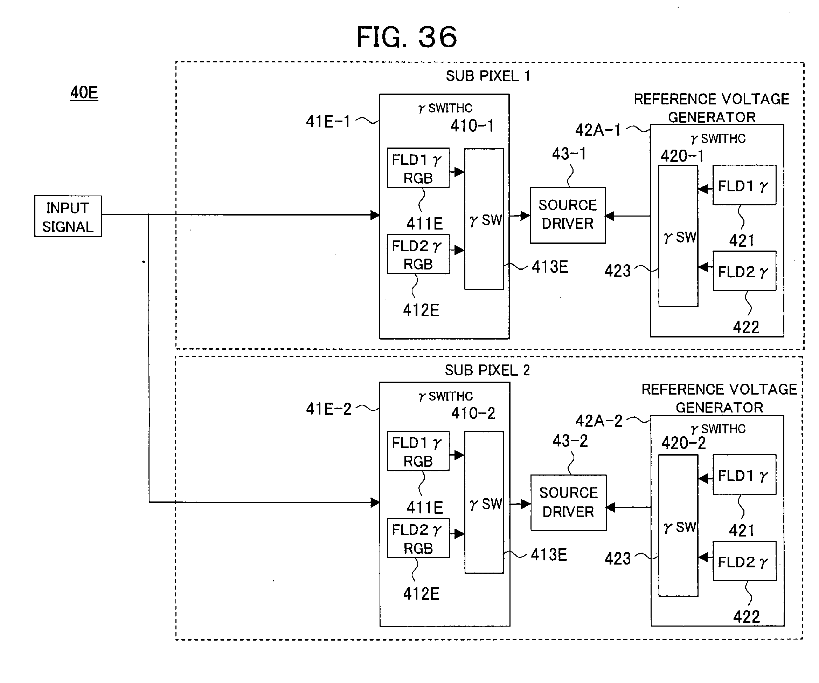

FIG. 36 is a diagram showing a sixth example of the configuration of a liquid crystal display device which can be applied to the drive method of the present embodiment.

The difference of this liquid crystal display device 40E from the device 40D of FIG. 34 resides in the configuration for performing γ corrections of R, G, and B. The rest of the configuration is the same as that of the device 40D. Accordingly, the explanation of basic functions of the components will be omitted.

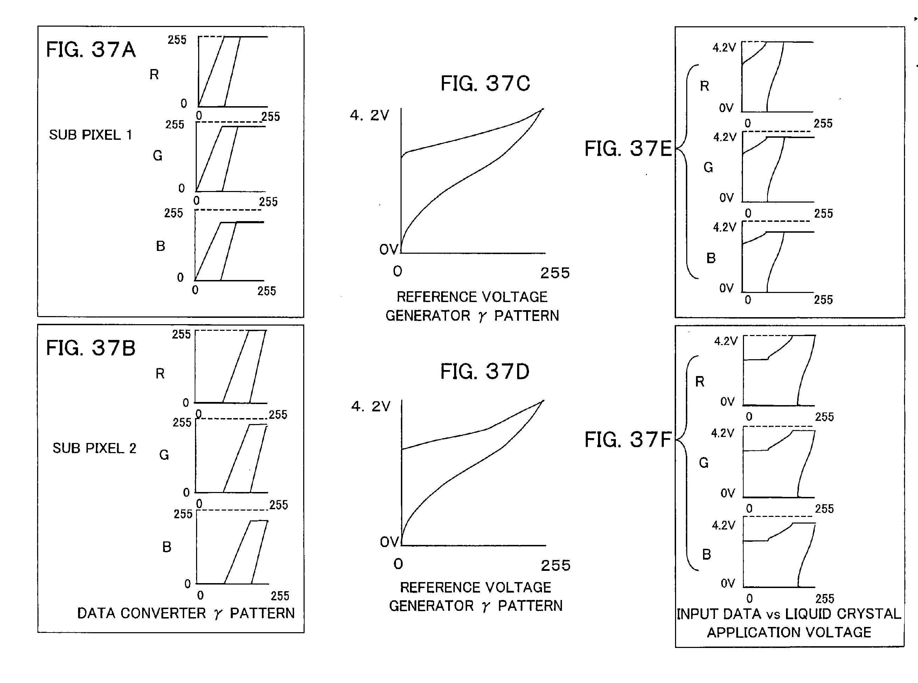

FIG. 37A shows the data conversion γ patterns PVW1 and PVB1 held in the first field γ characteristic holder 411 and the second field γ characteristic holder 412 of the γ switch 410-1, FIG. 37B shows the data conversion γ patterns PVW2 and PVB2 corresponding to R, G, and B held in the first field γ characteristic holder 411 and the second field γ characteristic holder 412 of the γ switch 410-2, FIG. 37C shows data conversion γ patterns PVW1 and PVB1 held in the first field γ characteristic holder 421 and the second field γ characteristic holder 422 of the reference voltage generator 42A-1, FIG. 37D shows data conversion γ patterns PVW2 and PVB2 held in the first field γ characteristic holder 421 and the second field γ characteristic holder 422 of the reference voltage generator 42A-2, and FIG. 37E and FIG. 37F show the output (liquid crystal application voltage) characteristics corresponding to R, G, and B of the source driver 43 with respect to the input data.

The above method is employed with respect to this device 40E, whereby the gray-scale performance is improved.

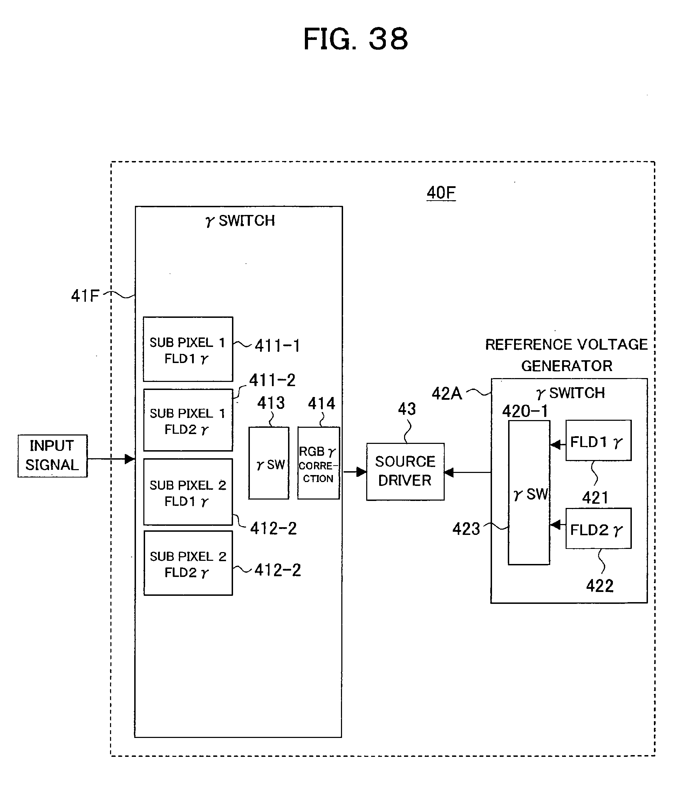

FIG. 38 is a diagram showing a seventh example of the configuration of a liquid crystal display device which can be applied to the drive method of the present embodiment.

The difference of this liquid crystal display device 40F from the device 40D of FIG. 34 resides in that, in the γ switch 410E of the data converter 41E, the first and second field γ holders of the sub pixel 1 and the first and second field γ holders of the sub pixel 2 are arranged in parallel and selectively switched by one γ switch 413F to output the signal and in that the signal is corrected at the RGB γ correction unit 414 and then output to the source driver 43. Accordingly, the device 40F of FIG. 38 can cope with sub pixel modulation processing by providing only one source driver 43 and reference voltage generator 42A.

The above drive method is employed with respect to this device 40E, whereby the gray-scale performance is improved.

INDUSTRIAL APPLICABILITY

The present image display device and image display method can display a middle gray-scale by using a plurality of pixels and, at the same time, can improve the viewing angle characteristics, so can be applied to the direct view type liquid crystal display devices etc.

**Claims**

1. An image display device enabling a gray-scale display in accordance with an input video signal, comprising:

   a gray-scale converter for converting a gray-scale of an input video signal to characteristic values of pixels two-dimensionally arranged with respect to the image to be displayed, wherein
   the gray-scale converter converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value.

2. An image display device as set forth in claim 1, further comprising a correction value setter for setting the correction values in accordance with a middle gray-scale to be expressed.

3. An image display device as set forth in claim 1, wherein the gray-scale converter converts a gray-scale for a video signal expressed by primary color luminance components.

4. An image display device as set forth in claim 1, wherein the gray-scale converter converts a gray-scale so that either one of the first characteristic value or second characteristic value to which the positive or negative correction value has been added becomes a maximum characteristic value or a minimum characteristic value.

5. An image display device enabling a gray-scale display in accordance with an input video signal, comprising:

   a gray-scale expresser for expressing a middle gray-scale of the input video signal by a field train formed by a plurality of fields, wherein
   the gray-scale expresser expresses a gray-scale so as to include at least one field converted to a first characteristic value obtained by adding a positive correction value to the gray-scale of the input video signal and at least one field converted to a second characteristic value obtained by adding a negative correction value.

6. An image display device as set forth in claim 5, further comprising a setter for setting the first characteristic value and the second characteristic value in accordance with a middle gray-scale to be displayed.

7. An image display device as set forth in claim 5, wherein the gray-scale expresser expresses by the field train a middle gray-scale of a video signal expressed by primary color luminance components.

8. An image display device as set forth in claim 5, wherein the gray-scale expresser expresses a gray-scale so that either one of the first characteristic value or second characteristic value becomes a maximum characteristic value or a minimum characteristic value.

9. An image display device enabling a gray-scale display in accordance with an input video signal, comprising:

   a gray-scale converter for converting a gray-scale of an input video signal to characteristic values of pixels two-dimensionally arranged with respect to the image to be displayed and
   a gray-scale expresser for expressing a middle gray-scale of the input video signal by a field train formed by a plurality of fields, wherein

the gray-scale converter converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value, and

the gray-scale expresser expresses a gray-scale so as to include at least one field converted to a first characteristic value obtained by adding a positive correction value to the gray-scale of the input video signal and at least one field converted to a second characteristic value obtained by adding a negative correction value.

10. An image display device as set forth in claim 9, further comprising a controller for controlling the gray-scale converter to convert a gray-scale when the input video signal includes a moving picture and controlling the gray-scale expresser to express a middle gray-scale by a field train when the input video signal is formed by a still image.

11. An image display device enabling an expression of a middle gray-scale of an input video signal by a field train formed by a plurality of fields and a gray-scale display in accordance with an input video signal, comprising:

a display including liquid crystal pixel cells displaying an image by a in accordance with in accordance with drive voltages and

a drive portion for generating drive voltages corresponding to effective voltages including a first voltage corresponding to a bright level and a second voltage corresponding to a dark level, wherein

the second voltage is set at a voltage lower than a threshold voltage of a liquid crystal cell.

12. An image display device enabling an expression of a middle gray-scale of an input video signal by a field train formed by a plurality of fields and a gray-scale display in accordance with an input video signal, comprising:

a display including liquid crystal pixel cells displaying an image by a gray-scale in accordance with drive voltages and

a drive portion for generating drive voltages corresponding to effective voltages including a first voltage corresponding to a bright level and a second voltage corresponding to a dark level, wherein

the first voltage is set at a voltage higher than a voltage at which the characteristic value of a liquid crystal cell starts to become substantially the maximum.

13. An image display device as set forth in claim 12, wherein an optical thickness of each pixel cell is set in accordance with the first voltage value.

14. An image display device enabling an expression of a middle gray-scale of an input video signal by a field train formed by a plurality of fields and a gray-scale display in accordance with an input video signal, comprising:

a display including liquid crystal pixel cells displaying an image by a gray-scale in accordance with drive voltages, wherein

the display is driven while changing a bright/dark ratio over time.

15. An image display device as set forth in claim 14, wherein the display is driven so that the dark ratio in the bright/dark ratio becomes larger.

16. An image display device as set forth in claim 15, wherein
the device further comprises a drive portion for generating drive voltages corresponding to effective voltages including a first voltage corresponding to a bright level and a second voltage corresponding to a dark level, and
the first voltage is set at a voltage higher than the voltage at which the characteristic value of a liquid crystal cell starts to become substantially the maximum.

17. An image display method enabling a gray-scale display in accordance with an input video signal, comprising:

a gray-scale conversion step of converting a gray-scale of an input video signal to characteristic values of pixels two-dimensionally arranged with respect to the image to be displayed, wherein

the gray-scale conversion step converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value.

**18.** An image display method enabling a gray-scale display in accordance with an input video signal, comprising:

a gray-scale expression step of expressing a middle gray-scale of the input video signal by a field train formed by a plurality of fields, wherein

the gray-scale expressing step expresses a gray-scale so as to include at least one field converted to a first characteristic value obtained by adding a positive correction value to the gray-scale of the input video signal and at least one field converted to a second characteristic value obtained by adding a negative correction value.

**19.** An image display method enabling a gray-scale display in accordance with an input video signal, comprising:

a gray-scale conversion step of converting a gray-scale of an input video signal to characteristic values of pixels two-dimensionally arranged with respect to the image to be displayed and

a gray-scale expression step of expressing a middle gray-scale of the input video signal by a field train formed by a plurality of fields, wherein

the gray-scale conversion step converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value, and

the gray-scale expressing step expresses a gray-scale so as to include at least one field converted to a first characteristic value obtained by adding a positive correction value to the gray-scale of the input video signal and at least one field converted to a second characteristic value obtained by adding a negative correction value.

**20.** An image display method enabling an expression of a middle gray-scale of an input video signal by a field train formed by a plurality of fields and a gray-scale display in accordance with an input video signal, comprising:

a step of generating drive voltages corresponding to effective voltages including a first voltage corresponding to a bright level and a second voltage corresponding to a dark level and

a step of applying the generated drive voltages to the liquid crystal cells, wherein the second voltage is set at a voltage lower than a threshold voltage of a liquid crystal cell.

**21.** An image display method enabling an expression of a middle gray-scale of an input video signal by a field train formed by a plurality of fields and a gray-scale display in accordance with an input video signal, comprising:

a step of generating drive voltages corresponding to effective voltages including a first voltage corresponding to a bright level and a second voltage corresponding to a dark level and

a step of applying the generated drive voltages to the liquid crystal cells, wherein

the first voltage is set at a voltage higher than a voltage at which the characteristic value of the liquid crystal cell starts to become substantially the maximum.

**22.** An image display method enabling an expression of a middle gray-scale of an input video signal by a field train formed by a plurality of fields and a gray-scale display in accordance with an input video signal, comprising:

driving a display including liquid crystal cells displaying an image by a gray-scale in accordance with drive voltages while changing a bright/dark ratio over time.

**Amended claims under Art. 19.1 PCT**

**1.** (Amended) An image display device enabling an expression of a middle gray-scale of an input video signal by effective voltages of a field train formed by a plurality of fields with a display rate higher than the video signal and a gray-scale display in accordance with the input video signal, comprising:

a display including liquid crystal pixel cells displaying an image by a gray-scale in accordance with drive voltages and

a drive portion generating drive voltages corresponding to a first voltage corresponding to a level brighter than the input video signal and a second voltage corresponding to a level darker than the input video signal, wherein the second voltage is set at a voltage lower than a threshold voltage of a liquid crystal cell.

**2.** (Amended) An image display device as set forth in claim 1, further comprising a setter for setting the first characteristic value and second characteristic value in accordance with a middle gray-scale to be displayed.

**3.** (Amended) An image display device as set forth in claim 1, wherein the gray-scale expresser expresses a gray-scale for a video signal expressed by primary color luminance components by the field train.

**4.** (Amended) An image display device as set forth in claim 1, wherein the gray-scale expresser converts a gray-scale so that either one of the first characteristic value or second characteristic value becomes a maximum characteristic value or a minimum characteristic value.

**5.** (Amended) An image display device enabling an expression of a middle gray-scale of an input video signal by effective voltages of a field train formed by a plurality of fields with a display rate higher than the video signal and a gray-scale display in accordance with the input video signal, comprising:

    a display including liquid crystal pixel cells displaying an image by a gray-scale in accordance with drive voltages and

    a drive portion for generating drive voltages corresponding to a first voltage corresponding to a level brighter than the input video signal and a second voltage corresponding to a level darker than the input video signal, wherein

    a maximum value of the first characteristic is set to a voltage higher than a voltage at which a characteristic value of a liquid crystal cell starts to become substantially maximum.

**6.** (Amended) An image display device as set forth in claim 5, wherein an optical thickness of each pixel cell is set thinner than a predetermined wavelength of each of the three primary colors displayed.

**7.** (Amended) An image display device enabling an expression of a middle gray-scale of an input video signal by effective voltages of a field train formed by a plurality of fields with a display rate higher than the video signal and a gray-scale display in accordance with the input video signal, comprising:

    a display including liquid crystal pixel cells displaying an image by a gray-scale in accordance with drive voltages, wherein

    the display is driven while changing a time ratio displayed by a bright level brighter than the input video signal and a dark level darker than the input video signal.

**8.** (Amended) An image display device as set forth in claim 7, wherein the display device is driven so that the time ratio of display by the dark level becomes greater in the time ratio of the bright level and the dark level.

**9.** (Amended) An image display device as set forth in claim 8, further comprising:

    a drive portion for generating drive voltages corresponding to a first voltage corresponding to the bright level and a second voltage corresponding to the dark level, wherein

    the maximum value of the first voltage is set at a voltage higher than a voltage at which a characteristic value of a liquid crystal cell starts to becomes substantially maximum.

**10.** (Amended) An image display device having a display enabling a gray-scale display in accordance with an input video signal, comprising:

    a gray-scale converter for converting a gray-scale of an input video signal to characteristic values of pixels two-dimensionally arranged with respect to the image to be displayed and

    a gray-scale expresser for expressing a middle gray-scale of the input video signal by a field train formed by a plurality of fields with display rates higher than the video signal, wherein

    the gray-scale converter converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value,

    the gray-scale expresser expresses a gray-scale so as to include at least one field converted to a third characteristic value obtained by adding a positive correction value to the gray-scale of the input video signal and at least one field converted to a second characteristic value obtained by adding a negative correction value, and

the gray-scale converter and the gray-scale expresser are controlled to display an gray-scale based on an input video signal.

**11.** (Amended) An image display device as set forth in claim 10, controlling the gray-scale converter to convert a gray-scale when the input video signal includes a moving picture and controlling the gray-scale expresser to express a middle gray-scale by a field train when the input video signal is formed by a still image.

**12.** (Amended) An image display device as set forth in claim 10, wherein
the device further comprises a reference voltage generator generating reference voltages corresponding to the third characteristic value and the fourth characteristic value in the gray-scale expresser and
the display is driven by reference voltages of the fields generated by the reference voltage generator corresponding to the first and second characteristic values converted in gray-scale by the gray-scale converter.

**13.** (Amended) An image display method enabling an expression of a middle gray-scale of an input video signal by effective voltages of a field train formed by a plurality of fields with a display rate higher than the video signal and a gray-scale display in accordance with the input video signal, comprising:

a step of generating drive voltages corresponding to a first voltage corresponding to a level brighter than the input video signal and a second voltage corresponding to a level darker than the input video signal and
a step of applying the generated drive voltages to liquid crystal cells, wherein
the second voltage is set at a voltage lower than a threshold voltage of a liquid crystal cell.

**14.** (Amended) An image display method enabling an expression of a middle gray-scale of an input video signal by effective voltages of a field train formed by a plurality of fields with a display rate higher than the video signal and a gray-scale display in accordance with the input video signal, comprising:

a step of generating drive voltages corresponding to a first voltage corresponding to a level brighter than the input video signal and a second voltage corresponding to a level darker than the input video signal and
a step of applying the generated drive voltages to liquid crystal cells, wherein
the first voltage is set at a voltage higher than a voltage at which a characteristic value of a liquid crystal cell starts to becomes substantially maximum.

**15.** (Amended) An image display method enabling an expression of a middle gray-scale of an input video signal by effective voltages of a field train formed by a plurality of fields with a display rate higher than the video signal and a gray-scale display in accordance with the input video signal, comprising the steps of:

driving a display including liquid crystal cells displaying an image by a gray-scale in accordance with drive voltages while changing a time ratio displayed by a bright level brighter than the input video signal and a dark level darker than the input video signal.

**16.** (Amended) An image display method enabling a gray-scale display in accordance with an input video signal, comprising:

a gray-scale conversion step of converting a gray-scale of an input video signal to characteristic values of pixels two-dimensionally arranged with respect to the image to be displayed and
a gray-scale expression step of expressing a middle gray-scale of the input video signal by a field train formed by a plurality of fields with display rates higher than the video signal, wherein
the gray-scale conversion step converts a gray-scale so as to include, among the plurality of pixels expressing a middle gray-scale, at least one pixel converted to a first characteristic value obtained by adding a positive correction value to the gray-scale of the input video signal and at least one pixel converted to a second characteristic value obtained by adding a negative correction value,
the gray-scale expressing step expresses a gray-scale so as to include at least one field converted to a first characteristic value obtained by adding a positive correction value to the gray-scale of the input video signal and at least one field converted to a second characteristic value obtained by adding a negative correction value, and
the gray-scale converter and the tone expresser are controlled to display the gray-scale based on an input video signal.

FIG. 1A

| | | | |
|---|---|---|---|
| 157 | 208 | 106 | 52 |
| 39 | 18 | 123 | 97 |
| 169 | 178 | 123 | 176 |
| 230 | 208 | 157 | 167 |

FIG. 1B

| | | | |
|---|---|---|---|
| 0 | 3 | 0 | 3 |
| 2 | 1 | 2 | 1 |
| 0 | 3 | 0 | 3 |
| 2 | 1 | 2 | 1 |

FIG. 1C

| | | | |
|---|---|---|---|
| 157 | 211 | 106 | 55 |
| 41 | 19 | 125 | 98 |
| 169 | 181 | 123 | 179 |
| 232 | 209 | 159 | 168 |

FIG. 1D

| | | | |
|---|---|---|---|
| 156 | 208 | 104 | 52 |
| 40 | 16 | 124 | 96 |
| 168 | 180 | 120 | 176 |
| 232 | 208 | 156 | 168 |

FIG. 2A

| | | | |
|---|---|---|---|
| 1 | 1 | 1 | 1 |
| 1 | 1 | 1 | 1 |
| 1 | 1 | 1 | 1 |
| 1 | 1 | 1 | 1 |

FIG. 2B

| | | | |
|---|---|---|---|
| 0 | 2 | 0 | 2 |
| 3 | 1 | 3 | 1 |
| 0 | 2 | 0 | 2 |
| 3 | 1 | 3 | 1 |

FIG. 2C

| | | | |
|---|---|---|---|
| 0 | 0 | 0 | 0 |
| 4 | 0 | 4 | 0 |
| 0 | 0 | 0 | 0 |
| 4 | 0 | 4 | 0 |

# FIG. 3

EP 1 662 474 A1

FIG. 4A

FIG. 4B

DITHER MATRIX

# FIG. 5

FIG. 6A

FIG. 6B

FIG. 7A

FIG. 7B

DITHER MATRIX

| | |
|---|---|
| F1 | F2 |
| F3 | F4 |

FIG. 8A

FIG. 8B

EACH PIXEL OUTPUT

MAXIMUM VALUE

MINIMUM VALUE

b

F1  F2  F3  F4

0   25   50   75   100

INPUT GRAY-SCALE(TRANSMITTANCE)

# FIG. 9

EP 1 662 474 A1

# FIG. 10

LEVEL (GRAY-SCALE) OF INPUT VIDEO SIGNAL

# FIG. 11

# FIG. 12

SECOND FIELD FLD2 · FIRST FIELD FLD1 · SECOND FIELD FLD2 · FIRST FIELD FLD1 · SECOND FIELD FLD2 · FIRST FIELD FLD1

VERTICAL DIRECTION

HORIZONTAL DIRECTION

0%  100%  100%  0%  100%  100%  0%  100%  100%

TIME

EP 1 662 474 A1

FIG. 13A

MIDDLE GRAY-SCALE

FIRST FIELD
FLD1

SECOND FIELD
FLD2

FIG. 13B

MIDDLE GRAY-SCALE

FIRST FIELD
FLD1

SECOND FIELD
FLD2

FIG. 13C

MIDDLE GRAY-SCALE

FIRST FIELD
FLD1

SECOND FIELD
FLD2

FIG. 14A

TRANSMITTANCE

LUMINANCE(60degW)
LUMINANCE(45degW)
LUMINANCE(30degW)

$T_1(V_1)$

$\Delta T(v_1)$

LUMINANCE(0degW)

$T_0(V_0)$

$\Delta T(v_0)$

$T_2(V_2)$

INPUT GRAY-SCALE

$v_2$   $v_0$   $v_1$

FIG. 14B

$\Delta T(v_1)$

$T_1(V_1)$

LUMINANCE(60degW)

$T_0(V_0)$

$\Delta T(v_0)$

LUMINANCE(30degW)

TRANSMITTANCE

LUMINANCE(45degW)

$T_2(V_2)$

$\Delta T(v_2)$

LUMINANCE(0degW)

INPUT GRAY-SCALE

$v_2$   $v_0$   $v_1$

FIG. 15A

| r1,g1,b1 | r2,g2,b2 | r1,g1,b1 | r2,g2,b2 |
| r2,g2,b2 | r1,g1,b1 | r2,g2,b2 | r1,g1,b1 |
| r1,g1,b1 | r2,g2,b2 | r1,g1,b1 | r2,g2,b2 |

FIG. 15B

| r2,g2,b2 | r1,g1,b1 | r2,g2,b2 | r1,g1,b1 |
| r1,g1,b1 | r2,g2,b2 | r1,g1,b1 | r2,g2,b2 |
| r2,g2,b2 | r1,g1,b1 | r2,g2,b2 | r1,g1,b1 |

EP 1 662 474 A1

## FIG. 16A

| r1,g1,b1 | r2,g2,b2 | r1,g1,b1 | r2,g2,b2 |
|---|---|---|---|
| r2,g2,b2 | r1,g1,b1 | r2,g2,b2 | r1,g1,b1 |
| r1,g1,b1 | r2,g2,b2 | r1,g1,b1 | r2,g2,b2 |

## FIG. 16B

| r2,g2,b2 | r1,g1,b1 | r2,g2,b2 | r1,g1,b1 |
|---|---|---|---|
| r1,g1,b1 | r2,g2,b2 | r1,g1,b1 | r2,g2,b2 |
| r2,g2,b2 | r1,g1,b1 | r2,g2,b2 | r1,g1,b1 |

⟺

# FIG. 17

31

VIDEO SIGNAL H(r0, g0, b0) → | TWO-VALUES GENERATOR |

(r1, g1, b1) →

(r2, g2, b2) →

17

| DITHERER | →

| OBLIQUE VIEWING ANGLE PARA-METER PORTION | ~ 32

FIG. 18

FIG. 19A

FIG. 19B

FIG. 19C

FIG. 19D

FIG. 19E

1.9V–4.0V

0V–4.0V

EP 1 662 474 A1

# FIG. 20A

Transmittance vs. Applied Voltage

| | Azim | Pola | Wave |
|---|---|---|---|
| | 0.0 | 0.0 | 550.0 |
| | 0.0 | 0.0 | 450.0 |
| | 0.0 | 0.0 | 620.0 |

L1=7.00V (100.00%)
L2=3.69V (80.00%)
L3=2.97V (50.00%)
L4=2.68V (30.00%)
L5=2.53V (20.00%)
L6=2.36V (10.00%)
L7=2.25V (5.00%)
L8=2.07V (1.00%)

# FIG. 20B

Transmittance vs. Applied Voltage

| | Azim | Pola | Wave |
|---|---|---|---|
| | 0.0 | 0.0 | 550.0 |
| | 0.0 | 0.0 | 450.0 |
| | 0.0 | 0.0 | 620.0 |

L1=7.00V (100.00%)
L2=4.06V (80.00%)
L3=3.12V (50.00%)
L4=2.76V (30.00%)
L5=2.60V (20.00%)
L6=2.41V (10.00%)
L7=2.28V (5.00%)
L8=2.09V (1.00%)

44

# FIG. 21A

# FIG. 21B

# FIG. 22

EP 1 662 474 A1

V LINE ↓

t

EX)
V LINE NUMBER
TIME RATIO: BRIGHT:DARK = 1:2
V LINE SELECTION SEQUENCE:
#1 (BRIGHT DATA) → #513 (DARK DATA)  → #2 (BRIGHT DATA) → #514 (DARK DATA) ···
→ #256 (BRIGHT DATA) → #768 (DARK DATA) → #257 (BRIGHT DATA) → #1 (DARK DATA)
→ #258 (BRIGHT DATA) → #2 (DARK DATA) ···

# FIG. 23A

TIME RATIO: 1:1

# FIG. 23B

TIME RATIO: 2 (DARK) :1 (BRIGHT)

FIG. 24A

TRANSMITTANCE

INPUT GRAY-SCALE

FIG. 24B

TRANSMITTANCE

INPUT GRAY-SCALE

FIG. 24C

TRANSMITTANCE

INPUT GRAY-SCALE

FIG. 25A

TRANSMITTANCE

INPUT GRAY-SCALE

FIG. 25B

TRANSMITTANCE

INPUT GRAY-SCALE

FIG. 26A

APPLICATION
VOLTAGE / V

FIG. 26B

APPLICATION
VOLTAGE / V

FIG. 26C

APPLICATION
VOLTAGE / V

**FIG. 27A** APPLICATION VOLTAGE / V

**FIG. 27B** APPLICATION VOLTAGE / V

# FIG. 28

EP 1 662 474 A1

# FIG. 29

<u>40A</u>

53

# FIG. 30

40B

DATA CONVERTER

γ SWITCH 410

41

FLD1 γ
411

INPUT SIGNAL

γ SW

FLD2 γ
412

413

43 SOURCE DRIVER

44 DISPLAY PANEL

REFERENCE VOLTAGE GENERATOR

γ SWITCH

FLD1 γ
421

42A

γ SW

FLD2 γ
422

423

# FIG. 31A

255

O

O            511

PVW

PVB

DATA CONVERTER $\gamma$ PATTERN

# FIG. 31B

4V

PVW

PVB

0V

O                    255

REFERENCE VOLTAGE
GENERATOR $\gamma$ PATTERN

# FIG. 31C

VW

VB

APPLICATION
VOLTAGE / V

4
3.5
3
2.5
2
1.5
1
0.5
0

0          INPUT          511

INPUT DATA vs LIQUID CRYSTAL
APPLICATION VOLTAGE

EP 1 662 474 A1

# FIG. 32

EP 1 662 474 A1

FIG. 33A

R

G

B

DATA CONVERTER $\gamma$ PATTERN

FIG. 33B

REFERENCE VOLTAGE
GENERATOR $\gamma$ PATTERN

FIG. 33C

R

G

B

INPUT DATA vs LIQUID CRYSTAL
APPLICATION VOLTAGE

# FIG. 34

EP 1 662 474 A1

FIG. 35A
FIG. 35B
FIG. 35C
FIG. 35D
FIG. 35E

# FIG. 36

40E

EP 1 662 474 A1

EP 1 662 474 A1

## FIG. 37A

SUB PIXEL 1

R

G

B

## FIG. 37B

SUB PIXEL 2

R

G

B

DATA CONVERTER γ PATTERN

## FIG. 37C

4.2V

0V

0          255

REFERENCE VOLTAGE
GENERATOR γ PATTERN

## FIG. 37D

4.2V

0V

0          255

REFERENCE VOLTAGE
GENERATOR γ PATTERN

## FIG. 37E

R

G

B

## FIG. 37F

R

G

B

INPUT DATA vs LIQUID CRYSTAL
APPLICATION VOLTAGE

# FIG. 38

| INTERNATIONAL SEARCH REPORT | International application No. |
|---|---|
| | PCT/JP2005/013144 |

A. CLASSIFICATION OF SUBJECT MATTER
*G09G3/36*(2006.01), *G02F1/133*(2006.01), *G09G3/20*(2006.01)

According to International Patent Classification (IPC) or to both national classification and IPC

B. FIELDS SEARCHED

Minimum documentation searched (classification system followed by classification symbols)
*G09G3/36*(2006.01), *G02F1/133*(2006.01), *G09G3/20*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2002/059685 A2 (INTERNATIONAL BUSINESS MACHINES CORP.), 01 August, 2002 (01.08.02), Full text; all drawings & JP 2004-525402 A & US 2002/0149598 A1 & GB 2387955 A | 1-4,17<br>8,20-21<br>10 |
| X | JP 7-121144 A (NEC Corp.), 12 May, 1995 (12.05.95), Par. Nos. [0017] to [0037]; Figs. 1 to 8 & US 5847688 A | 1-3,9,17,19 |
| X | JP 9-90910 A (Matsushita Electric Industrial Co., Ltd.), 04 April, 1997 (04.04.97), Par. Nos. [0010] to [0017]; Figs. 1 to 4 (Family: none) | 1-3,9,17,19 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2005 (06.10.05) | 25 October, 2005 (25.10.05) |

| Name and mailing address of the ISA/<br>Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2005/013144 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 7-294881 A  (Kabushiki Kaisha Kodo Eizo),<br>10 November, 1995 (10.11.95),<br>Par. Nos. [0016] to [0019]; Figs. 1 to 4, 9<br>(Family: none) | 5-7,18<br>8 |
| X<br><br>Y | JP 2-56522 A  (Seiko Instruments Inc.),<br>26 February, 1990 (26.02.90),<br>Page 1, lower right column, line 6 to page 2,<br>upper right column, line 1; Figs. 6 to 7<br>(Family: none) | 11-12,14,<br>20-22<br>13 |
| Y | JP 54-98526 A  (Matsushita Electric<br>Industrial Co., Ltd.),<br>03 August, 1979 (03.08.79),<br>Page 2, upper right column, lines 5 to 10<br>(Family: none) | 13 |
| A | JP 7-120724 A  (Asahi Glass Co., Ltd.),<br>12 May, 1995 (12.05.95),<br>Full text; all drawings<br>(Family: none) | 1-22 |
| P,X | WO 2005/038766 A1  (Matsushita Electric<br>Industrial Co., Ltd.),<br>28 April, 2005 (28.04.05),<br>Page 16, line 9 to page 21, line 11;<br>Figs. 7 to 10<br>(Family: none) | 1-4,17 |
| E,X | JP 2005-234552 A  (Sharp Corp.),<br>02 September, 2005 (02.09.05),<br>Par. Nos. [0088] to [0153]; Figs. 1 to 7<br>(Family: none) | 11-12,14-16,<br>20-22 |

Form PCT/ISA/210 (continuation of second sheet) (January 2004)

## INTERNATIONAL SEARCH REPORT

| International application No. |
| --- |
| PCT/JP2005/013144 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
The matter common to the inventions of claims 1-4, 17, the inventions of claims 5-10, 18-19, the inventions of claims 11-13, 20-21, and the inventions of claims 14-16, 22 relates to improvement of the field-of-view characteristic. However, the search has revealed that the improvement of the field-of-view characteristic is not novel since it is disclosed in documents JP 9-90910 A (Matsushita Electric Industrial Co., Ltd.), 04 April, 1997 (04.04.97) and JP 3-181988 A (Toshiba Corp.). As a result, the improvement of the field-of-view characteristic makes no contribution over the prior art and this common matter cannot be a special technical feature within the meaning of PCT Rule 13.2,      (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest.

☒ No protest accompanied the payment of additional search fees.

Form PCT/ISA/210 (continuation of first sheet (2)) (January 2004)

**INTERNATIONAL SEARCH REPORT**

International application No.

PCT/JP2005/013144

Continuation of Box No.III of continuation of first sheet(2)

second sentence. Accordingly, there exists no matter common to all the inventions of claims 1-22. Since there exists no other common feature which can be considered as a special technical feature within the meaning of PCT Rule 13.2, second sentence, no technical relationship within the meaning of PCT Rule 13 between the different inventions can be seen. Consequently, it is obvious that the inventions of claims 1-22 do not satisfy the requirement of unity of invention.

Form PCT/ISA/210 (extra sheet) (January 2004)